# EUROPEAN PATENT SPECIFICATION

(11) **EP 4 239 291 B1**
(45) Date of publication and mention of the grant of the patent: **23.09.2026**
(21) Application number: 21886013.8
(22) Date of filing: 20.10.2021
(51) Int. Cl.: B60L 53/62, B60L 53/64, B60L 53/68, B60L 58/13, B60L 58/16, G01C 21/34, G06Q 10/04, G06Q 10/20, G06Q 50/06, G06Q 50/40, G16Y 10/40, G16Y 40/20, H02J 7/90, H02J 7/50, G16Y 20/20, H01M 10/44, H01M 10/48

(54) **COMPUTATION SYSTEM, CHARGING PLAN CREATION PROGRAM, AND DISCHARGING PLAN CREATION PROGRAM**
BERECHNUNGSSYSTEM, PROGRAMM ZUR ERSTELLUNG EINES LADEPLANS UND PROGRAMM ZUR ERSTELLUNG EINES ENTLADEPLANS
SYSTÈME DE CALCUL, PROGRAMME DE CRÉATION DE PLAN DE CHARGE ET PROGRAMME DE CRÉATION DE PLAN DE DÉCHARGE

(30) Priority: 27.10.2020 JP 2020179419
(43) Date of publication of application: 06.09.2023
(73) Proprietor: Panasonic Intellectual Property Management Co., Ltd., Kadoma-shi, Osaka 571-0057 (JP)
(72) Inventor: MATSUDA Takashi, Kadoma-shi, Osaka 571-0057 (JP); YANG Changhui, Kadoma-shi, Osaka 571-0057 (JP); IIDA Takashi, Kadoma-shi, Osaka 571-0057 (JP); KITA Atsuyoshi, Kadoma-shi, Osaka 571-0057 (JP)
(74) Representative: Novagraaf International SA
(86) International application number: PCT/JP2021/038696
(87) International publication number: WO 2022/091894

(56) References cited:
- EP-A1- 2 458 704
- WO-A1-2020/090341
- WO-A1-2020/158073
- JP-A- 2011 122 926
- JP-A- 2016 006 400
- JP-A- 2020 092 598
- JP-B1- 6 651 063
- US-A1- 2014 136 448
- US-A1- 2019 039 467
- US-A1- 2021 158 291
- US-A1- 2021 379 999

## Description

### TECHNICAL FIELD

The present disclosure relates to a computation system, a charging plan creation program, and a discharging plan creation program which create a charging plan or a discharging plan for a secondary battery.

### BACKGROUND ART

In recent years, electric vehicles (EV) and plug-in hybrid vehicles (PHV) have become popular. These electric vehicles are equipped with a secondary battery as a key device. Appropriate charge and discharge management of the secondary battery is required to reduce degradation of the secondary battery and extend the life of the secondary battery.

Cost management is highly required for commercial vehicles such as delivery vehicles. It is desired to create a charging plan that reduces the degradation of the secondary battery during the nighttime when the electricity fees are low. When creating the charging plan, it is necessary to create an optimal charging plan according to daily changes in the state of charge (SOC) before charging and the time available for charging.

With respect to the creation of a charging plan, control for changing the charging pattern in real time according to the state of internal parameters has been proposed. Such a control is based on the premise of fast charging, and an upper limit current value that is less likely to cause degradation is set (see, for example, Patent Literature (PTL) 1). Moreover, in view of storage degradation and cycle degradation, control for determining the SOC at time of storage during which charging and discharging are not performed has been proposed (see, for example, PTL 2).

### Citation List

### Patent Literature

[PTL 1] Japanese Unexamined Patent Application Publication No. 2020-092598
[PTL 2] Japanese Patent No. 6651063
[PTL 3] United States Patent Application No. US 2019/039467 A1
[PTL 4] European Patent Application No. EP 2 458 704 A1
[PTL 5] United States Patent Application No. US 2014/136448 A1
[PTL 6] International Patent Application No. WO 2020/158073 A1
[PTL 7] International Patent Application No. WO 2020/090341 A1

### SUMMARY OF THE INVENTION

In the conventional controls, current control, time control, and SOC control while charging is suspended cannot be optimized at the same time.

The present disclosure has been conceived in view of such circumstances. An object of the present disclosure is to provide a technique for creating a charging plan or a discharging plan that minimizes costs, such as degradation of a secondary battery.

In order to solve the above problem, a computation system according to one aspect of the present disclosure includes: a path finder which (i) sets a plurality of nodes at a first predetermined interval in a state of charge (SOC) zone that is between a target SOC and a present SOC of a secondary battery provided in an electric moving body, (ii) sets a plurality of nodes at a second predetermined interval in a chargeable time period that is between a charging start time and a charging end time of the secondary battery, and (iii) finds a charging path from the present SOC at the charging start time to the target SOC at the charging end time via nodes among the plurality of nodes set in the SOC zone and the plurality of nodes set in the chargeable time period, the target SOC being set when the secondary battery is charged, and the plurality of nodes being set in a matrix pattern based on the first and second predetermined intervals; a charging plan creator which creates a charging plan based on the charging path found; a cost assigner which refers in units of time corresponding to the second predetermined interval to at least one of a storage degradation characteristic and a charge cycle degradation characteristic, or to a time-of-use electricity fee table, to assign a cost of a degradation amount or a cost of an electricity fee, respectively, to each of paths between the plurality of nodes, the storage degradation characteristic being defined by at least one element including at least one of the SOC or a temperature of the secondary battery, the charge cycle degradation characteristic defining a cycle degradation rate at a time of charging that is defined by at least one element including at least one of the SOC or a current rate of charging current of the secondary battery, wherein the path finder finds a charging path that minimizes a total cost of paths between the nodes.

It should be noted that any combination of the above-described structural elements and results of conversion of the representation of the present disclosure between devices, methods, systems, computer programs, etc. are also effective as aspects of the present disclosure.

According to the present disclosure, it is possible to create a charging plan or a discharging plan that minimizes costs such as degradation of a secondary battery.

### BRIEF DESCRIPTION OF THE DRAWINGS

[FIG. 1] FIG. 1 is a diagram for explaining an outline of a computation system according to an embodiment.
[FIG. 2] FIG. 2 is a diagram for explaining a detailed configuration of a power supply system provided in an electric vehicle according to the embodiment.
[FIG. 3] FIG. 3 illustrates configuration example 1 of the computation system according to the embodiment.
[FIG. 4A] FIG. 4A illustrates a schematic example of a storage degradation rate characteristic map.
[FIG. 4B] FIG. 4B illustrates a schematic example of a charge cycle degradation rate characteristic map.
[FIG. 4C] FIG. 4C illustrates a schematic example of a discharge cycle degradation rate characteristic map.
[FIG. 5] FIG. 5 illustrates an example of charging path finding.
[FIG. 6] FIG. 6 is a diagram for explaining an example of assignment of degradation costs to paths.
[FIG. 7] FIG. 7 is a diagram for specifically explaining path current limitation and time limitation.
[FIG. 8A] FIG. 8A is a diagram for explaining an example of charging path finding using Dijkstra's algorithm (No. 1).
[FIG. 8B] FIG. 8B is a diagram for explaining an example of the charging path finding using Dijkstra's algorithm (No. 1).
[FIG. 9A] FIG. 9A is a diagram for explaining an example of the charging path finding using Dijkstra's algorithm (No. 2).
[FIG. 9B] FIG. 9B is a diagram for explaining an example of the charging path finding using Dijkstra's algorithm (No. 2).
[FIG. 10A] FIG. 10A illustrates a specific example of variations in SOC and SOH between two cells connected in series.
[FIG. 10B] FIG. 10B illustrates a specific example of variations in SOC and SOH between two cells connected in series.
[FIG. 10C] FIG. 10C illustrates a specific example of variations in SOC and SOH between two cells connected in series.
[FIG. 11] FIG. 11 illustrates an example of charging path finding when two cells have different SOCs and SOHs.
[FIG. 12] FIG. 12 is a flowchart illustrating a flow of a process of creating a charging plan performed by the computation system according to the embodiment.
[FIG. 13] FIG. 13 illustrates configuration example 2 of the computation system according to the embodiment.
[FIG. 14] FIG. 14 illustrates an example of discharging path finding.
[FIG. 15] FIG. 15 is a flowchart illustrating a flow of a process of deriving a target SOC performed by the computation system according to the embodiment.
[FIG. 16] FIG. 16 illustrates configuration example 3 of the computation system according to the embodiment.
[FIG. 17] FIG. 17 is a flowchart illustrating a flow of a process of creating a discharging plan performed by the computation system according to the embodiment.

### DESCRIPTION OF EMBODIMENT

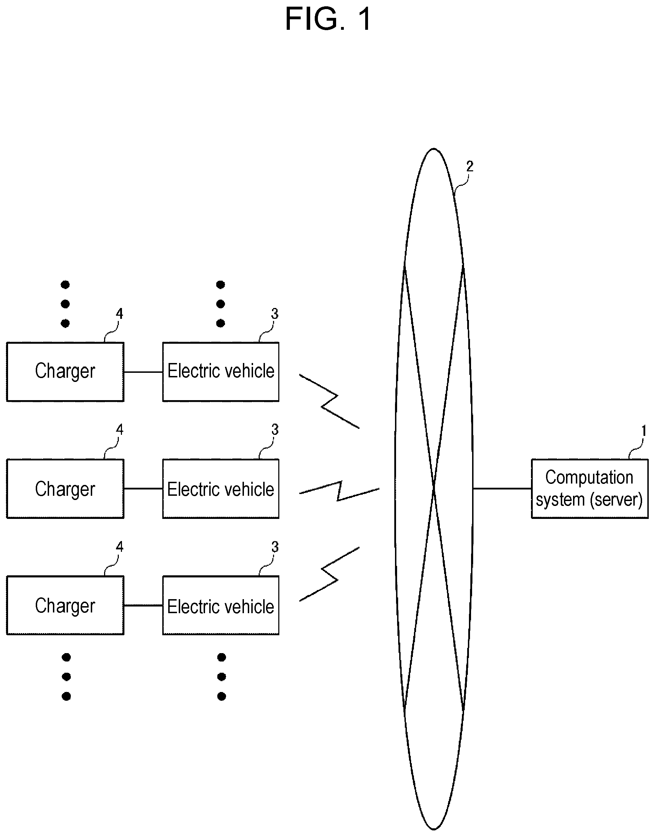

FIG. 1 is a diagram for explaining an outline of computation system 1 according to an embodiment. Computation system 1 is a system used by a business operator that operates delivery business, bus business, taxi business, rental car business, car sharing business, and the like. Computation system 1 is a system for managing business of the business operator. Computation system 1 includes one or more information processing devices (for example, a server or a personal computer (PC)). Part or all of the information processing devices included in computation system 1 may be present in a data center. For example, computation system 1 may be configured with a combination of a server in the data center and a client PC in the business operator.

The business operator (in this description, a delivery company is assumed) owns a plurality of electric vehicles 3 and a plurality of chargers 4, and utilizes electric vehicles 3 for the delivery business. In the present embodiment, each electric vehicle 3 is assumed to be a pure electric vehicle (EV) without an engine.

Each of electric vehicles 3 includes a wireless communication function, and is connectable to network 2 to which computation system 1 is connected. Electric vehicle 3 is capable of transmitting battery data of a secondary battery included in electric vehicle 3 to computation system 1 via network 2. Electric vehicle 3 may transmit the battery data while electric vehicle 3 is parked in the parking lot of the business office or in the garage, or while electric vehicle 3 is traveling.

Network 2 is a general term for communication paths such as the Internet and dedicated lines, and any communication medium or protocol may be used. Examples of the communication medium that can be used include a mobile phone network (cellular network), wireless local area network (LAN), wired LAN, optical fiber network, asymmetric digital subscriber line (ADSL) network, and community antenna television (CATV) network. Examples of the communication protocol that can be used include transmission control protocol (TCP)/ internet protocol (IP), user datagram protocol (UDP)/IP, and Ethernet (registered trademark).

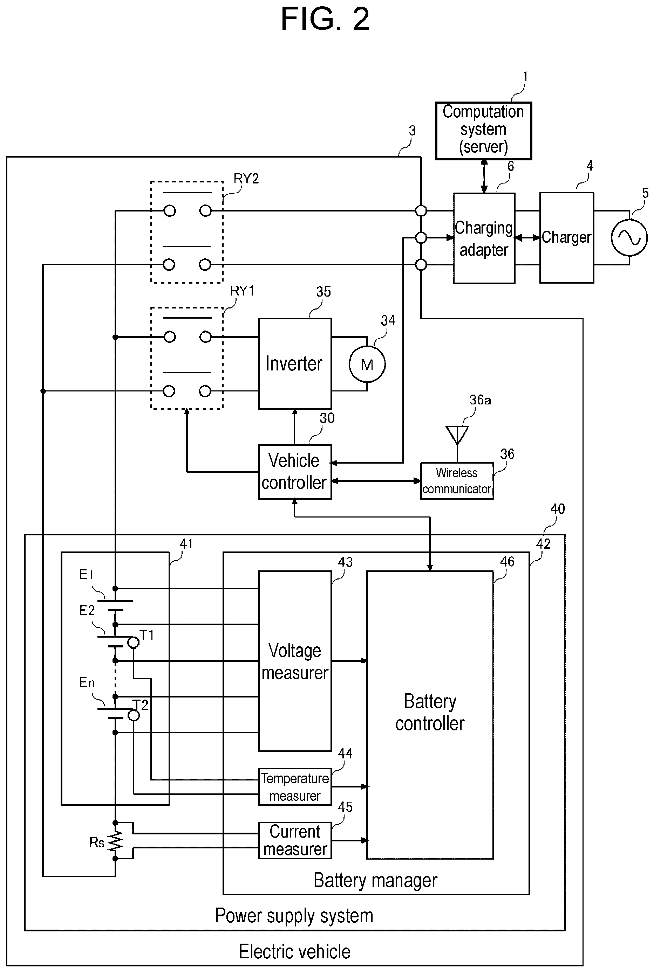

It may be that electric vehicle 3 is connected to the server or PC of the business operator via a peer-to-peer (P2P) network to directly transmit the battery data of the secondary battery included in electric vehicle 3 to the server or PC of the business operator. It may also be that the battery data is transferred to the server or PC of the business operator via a recording medium on which the battery data is recorded. Electric vehicle 3 may also transmit the battery data to the server or PC of the business operator via charging adapter 6 (see FIG. 2) to be described later.

FIG. 2 is a diagram for explaining a detailed configuration of power supply system 40 provided in electric vehicle 3 according to the embodiment. Power supply system 40 is connected to motor 34 via first relay RY1 and inverter 35. During powering, inverter 35 converts the direct-current (DC) power supplied from power supply system 40 into alternating-current (AC) power, and supplies the AC power to motor 34. During regeneration, the AC power supplied from motor 34 is converted into DC power, and the DC power is supplied to power supply system 40. Motor 34 is a three-phase AC motor, and rotates according to the AC power supplied from inverter 35 during powering. During regeneration, rotational energy due to deceleration is converted into AC power, and the AC power is supplied to inverter 35.

Vehicle controller 30 is a vehicle electronic control unit (ECU) that controls the entire electric vehicle 3, and may be configured with, for example, an integrated vehicle control module (VCM). Wireless communicator 36 performs signal processing for wireless connection to network 2 via antenna 36a. Examples of the wireless communication network to which electric vehicle 3 can be wirelessly connected include a mobile phone network (cellular network), wireless LAN, electronic toll collection system (ETC), dedicated short range communications (DSRC), vehicle-to-infrastructure (V2I), and vehicle-to-vehicle (V2V).

First relay RY1 is a contactor disposed between lines connecting power supply system 40 and inverter 35. When the vehicle is traveling, vehicle controller 30 turns first relay RY1 into an ON state (closed state) to electrically connect power supply system 40 and the power system of electric vehicle 3. When the vehicle is not traveling, in principle, vehicle controller 30 turns first relay RY1 into an OFF state (open state) to electrically disconnect power supply system 40 from the power system of electric vehicle 3. Note that other types of switches, such as semiconductor switches, may be used instead of relays.

By connecting electric vehicle 3 to charger 4 , battery module 41 in power supply system 40 can be externally charged. In the present embodiment, electric vehicle 3 is connected to charger 4 via charging adapter 6. Charging adapter 6 is attached to, for example, the tip of the terminal of charger 4. When charging adapter 6 is attached to charger 4, the controller in charging adapter 6 establishes a communication channel with the controller in charger 4.

When charging adapter 6 attached to charger 4 and electric vehicle 3 are connected by a charging cable, battery module 41 in electric vehicle 3 can be charged from charger 4. Charging adapter 6 lets the electric power supplied from charger 4 to pass through charging adapter 6 to electric vehicle 3. Charging adapter 6 includes a wireless communication function, and is capable of exchanging data with computation system 1. Charging adapter 6 functions as a gateway that relays communications between electric vehicle 3 and charger 4, between electric vehicle 3 and computation system 1, and between charger 4 and computation system 1.

Charger 4 is connected to commercial power system 5, and charges power supply system 40 in electric vehicle 3. In electric vehicle 3, second relay RY2 is disposed between lines connecting power supply system 40 and charger 4. Note that other types of switches, such as semiconductor switches, may be used instead of relays. Battery manager 42 turns on second relay RY2 directly or via vehicle controller 30 before charging starts, and turns off second relay RY2 after charging ends.

Generally, batteries are charged with alternating current for normal charging and with direct current for fast charging. When charging with AC (for example, single-phase 100/200 V) is performed, an AC/DC converter (not illustrated) disposed between second relay RY2 and power supply system 40 converts the AC power into DC power. When charging with DC, charger 4 generates DC power by full-wave rectifying the AC power supplied from commercial power system 5 and smoothing the rectified DC power with a filter.

Example of the fast charging standards that can be used include CHAdeMO (registered trademark), ChaoJi, GB/T, and combined charging system (Combo). CHAdeMO 2.0 defines the maximum output (specification) as 1000 V × 400 A = 400 kW. CHAdeMO 3.0 defines the maximum output (specification) as 1500 V × 600 A = 900 kW. ChaoJi defines the maximum output (specification) as 1500 V × 600 A = 900 kW. GB/T defines the maximum output (specification) as 750 V × 250 A = 185 kW. Combo defines the maximum output (specification) as 900 V × 400 A= 350 kW. CHAdeMO, ChaoJi, and GB/T employ controller area network (CAN) as a communication scheme. Combo employs power line communication (PLC) as a communication scheme.

A charging cable adopting the CAN system also includes a communication line in addition to a power line. When electric vehicle 3 and charging adapter 6 are connected with the charging cable, vehicle controller 30 establishes a communication channel with the controller in charging adapter 6. In addition, in the charging cable adopting the PLC system, a communication signal is superimposed on the power line and transmitted.

Vehicle controller 30 establishes a communication channel with battery manager 42 via an in-vehicle network (for example, CAN or local interconnect network (LIN)). When the communication standard between vehicle controller 30 and the controller in charging adapter 6 is different from the communication standard between vehicle controller 30 and battery manager 42, vehicle controller 30 functions as a gateway.

Although details will be described later, in the present embodiment, computation system 1 includes a function of creating an optimum charging plan (charging schedule). Upon receiving the charging plan from computation system 1, the controller in charging adapter 6 transfers the received charging plan to the controller in charger 4. In such a case, even when the controller in charging adapter 6 receives a command value for the charging current from vehicle controller 30, the controller in charging adapter 6 does not transfer the command value to the controller in charger 4. When the controller in charging adapter 6 receives the upper limit values (limit values) of power, current, and voltage from vehicle controller 30, the controller in charging adapter 6 transfers the upper limit values to the controller in charger 4.

It is preferable that charging adapter 6 is configured with a small housing. In this case, the driver of electric vehicle 3 is able to easily carry charging adapter 6, and is able to attach charging adapter 6 to another charger 4, which is other than chargers 4 provided in the office, for use. For example, charging adapter 6 can be attached to charger 4 provided in public facilities, commercial facilities, gas stations, car dealers, and service areas of highways as charger 4 other than chargers 4 provided in the office, and used. In this case, battery module 41 in electric vehicle 3 can also be charged from charger 4 outside the office based on the charging plan created by computation system 1.

Power supply system 40 provided in electric vehicle 3 includes battery module 41 and battery manager 42. Battery module 41 includes a plurality of cells E1-En connected in series. Battery module 41 may include a plurality of cells connected in series and parallel. Battery module 41 may be configured by combining a plurality of battery modules. Lithium-ion battery cells, nickel-hydrogen battery cells, lead-acid battery cells, and the like can be used for the cells. Hereinafter, in the present description, an example is assumed where lithium-ion battery cells (nominal voltage: 3.6 - 3.7 V) are used. The number of cells E1-En connected in series is determined according to the driving voltage of motor 34.

Shunt resistor Rs is connected in series with cells E1-En. Shunt resistor Rs functions as a current sensing element. A Hall element may be used instead of shunt resistor Rs. A plurality of temperature sensors T1 and T2 for detecting the temperatures of cells E1-En are disposed in battery module 41. One temperature sensor may be disposed in a battery module, or one temperature sensor may be disposed for each set of a plurality of cells. Thermistors, for example, can be used as temperature sensors T1 and T2.

Battery manager 42 includes voltage measurer 43, temperature measurer 44, current measurer 45, and battery controller 46. Respective nodes of cells E1-En connected in series and voltage measurer 43 are connected by a plurality of voltage lines. Voltage measurer 43 measures the voltage of each of cells E1-En by measuring the voltage between two adjacent voltage lines. Voltage measurer 43 transmits the measured voltage of each of cells E1-En to battery controller 46.

Since voltage measurer 43 has a higher voltage than battery controller 46, voltage measurer 43 and battery controller 46 are connected by a communication line while being insulated from each other. Voltage measurer 43 can be configured with an application specific integrated circuit (ASIC) or a general-purpose analog front-end IC. Voltage measurer 43 includes a multiplexer and an A/D converter. The multiplexer sequentially outputs voltages between two adjacent voltage lines to the A/D converter. The A/D converter converts the analog voltage input from the multiplexer into a digital value.

Temperature measurer 44 includes resistor voltage dividers and an A/D converter. The A/D converter sequentially converts a plurality of analog voltages divided by temperature sensors T1 and T2 and a plurality of resistor voltage dividers into digital values, and outputs the digital values to battery controller 46. Battery controller 46 estimates the temperatures of cells E1-En based on the digital values. For example, battery controller 46 estimates the temperature of each of cells E1-En based on the value measured by the temperature sensor closest to each cell E1-En.

Current measurer 45 includes a differential amplifier and an A/D converter. The differential amplifier amplifies the voltage across shunt resistor Rs, and outputs the amplified voltage to the A/D converter. The A/D converter converts the analog voltage input from the differential amplifier into a digital value, and outputs the digital value to battery controller 46. Battery controller 46 estimates currents flowing through cells E1-En based on the digital values.

When battery controller 46 includes an A/D converter and an analog input port, it may be that temperature measurer 44 and current measurer 45 output the analog voltages to battery controller 46, and the A/D converter in battery controller 46 converts the analog voltages into digital values.

Battery controller 46 manages the states of cells E1-En based on the voltages, temperatures, and currents of cells E1-En measured by voltage measurer 43, temperature measurer 44, and current measurer 45. Battery controller 46 can be configured with a microcomputer and a non-volatile memory (for example, (electrically erasable programmable read-only memory (EEPROM) or flash memory). Battery controller 46 estimates the SOC and state of health (SOH) of each of cells E1-En.

Battery controller 46 estimates the SOC by combining an open circuit voltage (OCV) method and a current integration method. The OCV method is a method of estimating the SOC based on the OCV of each cell E1-En measured by voltage measurer 43 and the SOC-OCV curves of cells E1-En. The SOC-OCV curves of cells E1-En are created in advance based on characteristic tests performed by the battery manufacturer and recorded in the internal memory of the microcomputer at the time of shipment.

The current integration method is a method of estimating the SOC based on the OCV at the start of charging and discharging of cells E1-En and the integrated value of the current measured by current measurer 45. In the current integration method, the measurement errors of current measurer 45 are accumulated more as the length of the charging and discharging time periods increase. Accordingly, it is preferable to correct the SOC estimated by the current integration method, using the SOC estimated by the OCV method.

The SOH is defined by the ratio of the present full charge capacity (FCC) to the initial FCC, and the lower the value (closer to 0%), the more advanced the degradation. The SOH may be obtained by capacity measurement by complete charging and discharging, or may be obtained by adding up the storage degradation and cycle degradation.

The SOH can also be estimated based on the correlation with the internal resistance of the cell. The internal resistance can be estimated by dividing the voltage drop that occurs when a given current is applied to the cell for a given period of time, by the current value. The internal resistance decreases as the temperature rises, and the internal resistance increases as the SOH decreases.

Battery controller 46 transmits the voltages, temperatures, currents, SOCs and SOHs of cells E1-En to vehicle controller 30 via the in-vehicle network. Vehicle controller 30 transmits battery data including the present SOCs, SOHs, and temperatures of cells E1-En to computation system 1.

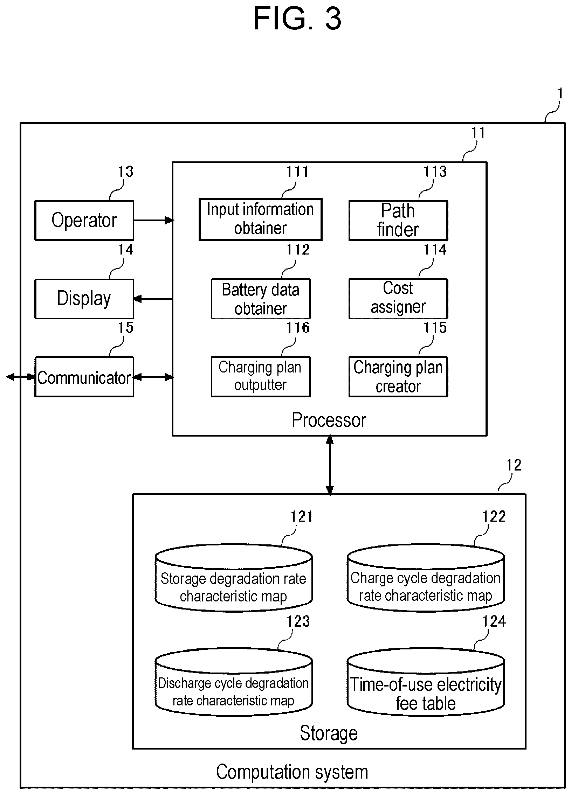

FIG. 3 illustrates configuration example 1 of computation system 1 according to the embodiment. Computation system 1 includes processor 11, storage 12, operator 13, display 14, and communicator 15. Processor 11 includes input information obtainer 111, battery data obtainer 112, path finder 113, cost assigner 114, charging plan creator 115, and charging plan outputter 116. The functions of processor 11 can be realized by cooperation of hardware resources and software resources, or only by hardware resources. Examples of the hardware resources that can be used include central processing unit (CPU), read only memory (ROM), random access memory (RAM), graphics processing unit (GPU), application specific integrated circuit (ASIC), field programmable gate array (FPGA), and other large scale integration (LSI). Programs, such as operating systems and applications, can be used as software resources.

Storage 12 includes storage degradation rate characteristic map 121, charge cycle degradation rate characteristic map 122, discharge cycle degradation rate characteristic map 123, and time-of-use electricity fee table 124. Storage 12 includes a non-volatile recording medium, such as solid state drive (SSD) and hard disk drive (HDD), and records various programs and data.

Storage degradation rate characteristic map 121, charge cycle degradation rate characteristic map 122, and discharge cycle degradation rate characteristic map 123 are obtained by mapping the storage degradation rate characteristics, the charge cycle degradation rate characteristics, and the discharge cycle degradation rate characteristics of the secondary battery provided in electric vehicle 3. The storage degradation rate characteristics, the charge cycle degradation rate characteristics, and the discharge cycle degradation rate characteristics of secondary batteries are derived in advance for each secondary battery product through experiments and simulations performed by battery manufacturers. Note that data derived by other evaluation organizations may also be used.

Storage degradation is degradation that progresses over time in accordance with the temperature and the SOC of the secondary battery at each time point. The storage degradation progresses over time regardless of whether charging or discharging is being performed. Storage degradation is caused mainly by the formation of a film (solid electrolyte interphase (SEI) film) on the negative electrode. Storage degradation depends on the SOC and temperature at each time point. Generally, the storage degradation rate increases as the SOC at each time point increases or the temperature at each time point increases.

Cycle degradation is degradation that progresses as the number of times charging and discharging are performed increases. Cycle degradation is mainly caused by cracking or peeling due to expansion or contraction of the active material. Cycle degradation depends on the current rate, the SOC range used, and the temperature. Generally, the cycle degradation rate increases with an increase in the current rate, the SOC range used, and the temperature.

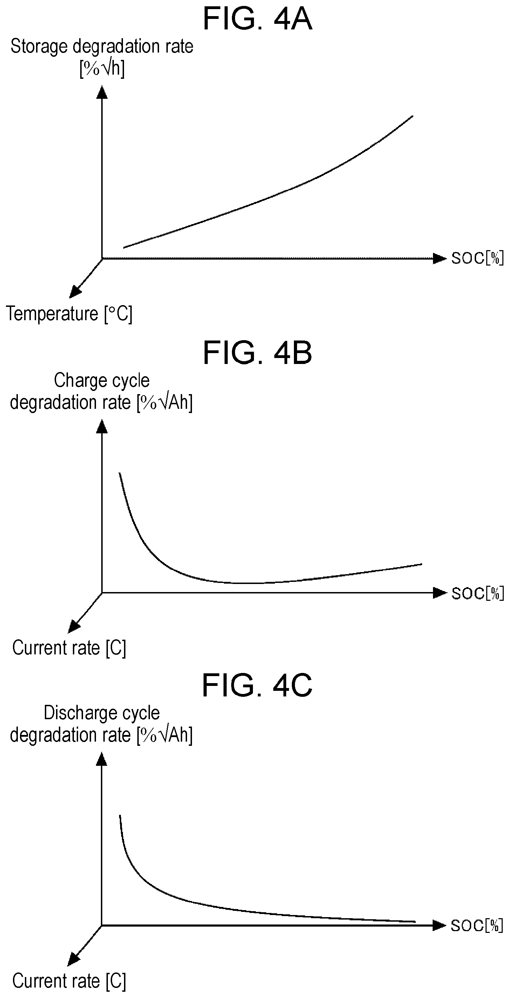

FIG. 4A to FIG. 4C illustrate schematic examples of the storage degradation rate characteristic map, the charge cycle degradation rate characteristic map, and the discharge cycle degradation rate characteristic map. FIG. 4A illustrates a schematic example of the storage degradation rate characteristic map. The X-axis indicates SOC [%], the Y-axis indicates temperature [°C], and the Z-axis indicates storage degradation rate [%/√h]. Storage degradation is known to progress in accordance with the 0.5 power law (square root) of time h (hour). As illustrated in FIG. 4A, the storage degradation rate increases as the SOC increases.

FIG. 4B illustrates a schematic example of the charge cycle degradation rate characteristic map. The X-axis indicates the SOC use range [%], the Y-axis indicates the current rate [C], and the Z-axis indicates the charge cycle degradation rate [%/√Ah]. Cycle degradation is assumed to progress in accordance with the 0.5 power law (square root) of ampere hour (Ah). As illustrated in FIG. 4B, when charging is performed in the low SOC region, the charge cycle degradation rate increases. In addition, when charging is performed in the high SOC region, too, the charge cycle degradation rate increases, though not as fast as in the low SOC region.

FIG. 4C illustrates a schematic example of the discharge cycle degradation rate characteristic map. The X-axis indicates the SOC use range [%], the Y-axis indicates the current rate [C], and the Z-axis indicates the discharge cycle degradation rate [%/√Ah]. The discharge cycle degradation rate increases as discharging is performed in a lower SOC region.

The cycle degradation characteristics are also influenced by temperature, although not as much as the influence by the current rate. Accordingly, in order to increase the estimation accuracy of the cycle degradation rate, it is preferable to prepare cycle degradation characteristics that define the relationship between the SOC use range and the cycle degradation rate for respective two-dimensional combinations of current rates and temperatures. On the other hand, when generating a simple cycle degradation rate characteristic map, it is only necessary to prepare cycle degradation rate characteristics for each of a plurality of current rates while assuming the temperature as room temperature.

The storage degradation rate characteristics, the charge cycle degradation rate characteristics, and the discharge cycle degradation rate characteristics may be defined by functions instead of maps.

Referring back to FIG. 3, time-of-use electricity fee table 124 is a table indicating the electricity fees for each time slot contracted with an electric power company. Nighttime electricity fees are often set lower than daytime electricity fees. In addition, for daytime electricity fees, a pay-as-you-go system is often adopted in which the electricity fees per 1 kWh increase in stages with an increase in the cumulative power consumption.

Electric power companies in Japan offer a variety of fee plans. Examples of such plans provided include: (a) a plan that sets fees according to the amount of use regardless of the time of day or day of the week; (b) a plan that sets low fees for the time slot from 1:00a.m. to 9:00a.m.; (c) a plan that sets low fees for the time slot from 9:00p.m. to 5:00a.m. the following morning; (d) a plan that sets low fees for the time slot from 9:00p.m. to 9:00a.m. the following morning; (e) a plan that sets low fees for the time slot from 11:00p.m. to 7:00a.m. the following morning; (f) a plan that sets low fees for the time slot from 10:00p.m. to 8:00a.m. the following morning; (g) a plan that sets low fees for Saturdays and Sundays; (h) a plan for the summer season divided into three time slots with relatively high fees during the peak hours (1:00p.m. to 4:00p.m.) and low fees during the night time (from 11:00p.m. to 7:00a.m. the following morning); and (i) a plan that sets detailed fees by "season" and "time slot", and sets low fees for the time slot from 11:00p.m. to 7:00a.m. the following morning.

In the case of a large business operator, such as the delivery business, according to the present embodiment, it is also possible to set a more detailed and customized fee plan through a separate contract between the business operator and the electric power company.

Operator 13 is a user interface such as a keyboard, a mouse, and a touch panel, and receives an operation of the user of computation system 1. Display 14 includes a display such as a liquid crystal display or an organic electroluminescent (EL) display, and displays an image generated by processor 11. Communicator 15 performs communication processing for communicating with charging adapter 6, electric vehicle 3, or charger 4 directly or via network 2.

Input information obtainer 111 obtains the target SOC, charging start time, and charging end time for charging battery module 41 provided in electric vehicle 3, which are input from operator 13. The time period from the charging start time to the charging end time is the time period available for charging.

Battery data obtainer 112 obtains battery data of battery module 41 from vehicle controller 30 of electric vehicle 3 via communicator 15. The battery data includes at least the present SOCs of cells E1-En included in battery module 41. The battery data may also include the present SOHs and temperatures of cells E1-En.

Path finder 113 sets a plurality of nodes at a predetermined interval in the SOC zone that is between the obtained target SOC and present SOC. For example, the nodes are set in increments of 0.5%. The nodes may be set in different increments such as 1%, 5%, or 10%.

Path finder 113 sets a plurality of nodes at a predetermined interval in the chargeable time period that is between the obtained charging start time and the obtained charging end time. For example, nodes are set in increments of 30 minutes. The nodes may be set in different increments, such as 3 minutes, 5 minutes, 10 minutes, or 15 minutes.

Path finder 113 sets paths between the nodes set in a matrix pattern. Cost assigner 114 refers to storage degradation rate characteristic map 121 and charge cycle degradation rate characteristic map 122 to assign degradation costs to paths between nodes. Path finder 113 finds the charging path that minimizes the total degradation cost of paths between nodes. Charging plan creator 115 creates a charging plan based on the found charging path. Charging plan outputter 116 transmits the created charging plan to charger 4 via charging adapter 6. Specific examples will be described below.

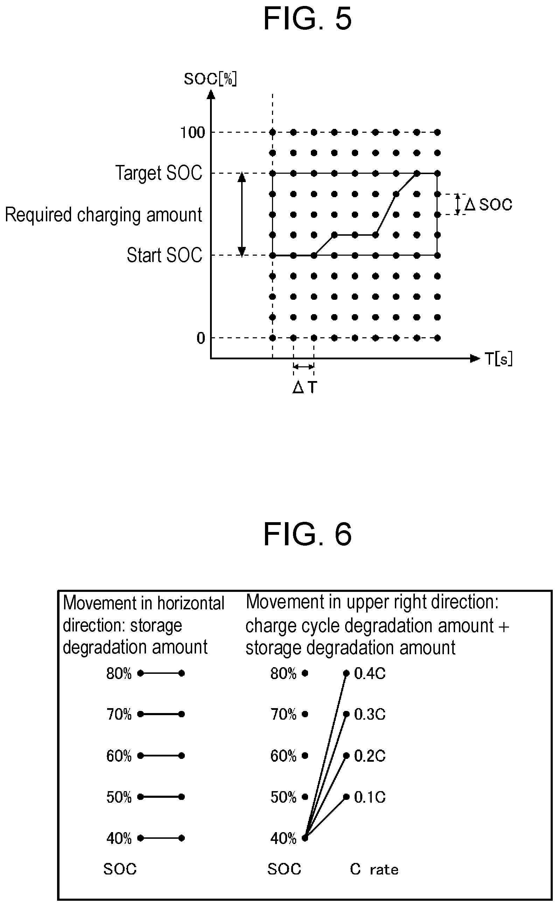

FIG. 5 illustrates an example of charging path finding. FIG. 5 illustrates an example where the start SOC is 40% and the target SOC is 80%. The present SOC obtained by battery data obtainer 112 is set to the start SOC. The power amount corresponding to the SOC range between the target SOC and the start SOC corresponds to the required charging amount. Path finder 113 finds the optimum path from the start SOC to the target SOC within the limited time period available for charging.

FIG. 6 is a diagram for explaining an example of assignment of degradation costs to paths. As illustrated in FIG. 5, in the charging path according to the present embodiment, charging can be suspended in units of ΔT [s]. While charging is suspended, only storage degradation progresses.

As illustrated in FIG. 6, cost assigner 114 refers to storage degradation rate characteristic map 121 to calculate, as a degradation cost, the degradation amount generated each of when charging is suspended for units of time (ΔT) at the SOC of 40%, when charging is suspended for units of time (ΔT) at the SOC of 50%, when charging is suspended for units of time (ΔT) at the SOC of 60%, when charging is suspended for units of time (ΔT) at the SOC of 70%, and when charging is suspended for units of time (ΔT) at the SOC of 80%. Since the SOC basically does not change while charging is suspended, the movement between nodes while charging is suspended is in the horizontal direction.

When the cell temperature is 40° or less, the temperature has little effect on the storage degradation rate, so that cost assigner 114 is capable of assuming that the temperature is room temperature. In that case, cost assigner 114 obtains the storage degradation rate between nodes in the horizontal direction based on the room temperature and the SOC. Cost assigner 114 multiplies the storage degradation rate between nodes in the horizontal direction by units of time (ΔT) to calculate the degradation amount between nodes in the horizontal direction.

Note that cost assigner 114 may assume that the present cell temperature obtained by battery data obtainer 112 continues till the charging end time. In that case, cost assigner 114 obtains the storage degradation rate between nodes in the horizontal direction based on the obtained temperature and SOC. Cost assigner 114 multiplies the storage degradation rate between nodes in the horizontal direction by units of time (ΔT) to calculate the degradation amount between nodes in the horizontal direction.

It may also be that cost assigner 114 obtains weather forecast information for the area where charger 4 is provided from a weather forecast server (not illustrated), and estimates the temperatures between nodes in the horizontal direction from the charging start time to the charging end time. In that case, cost assigner 114 obtains the storage degradation rate between nodes in the horizontal direction based on the estimated temperatures and SOCs between the nodes in the horizontal direction. Cost assigner 114 multiplies the storage degradation rate between nodes in the horizontal direction by units of time (ΔT) to calculate the degradation amount between nodes in the horizontal direction.

On the other hand, during charging, both of the charge cycle degradation and the storage degradation progress. As illustrated in FIG. 6, cost assigner 114 calculates the current rate (0.1C in the example illustrated in FIG. 6) for reaching SOC 50% from SOC 40% in units of time (ΔT), the current rate (0.2C in the example illustrated in FIG. 6) for reaching SOC 60% from SOC 40% in units of time (ΔT), the current rate (0.3C in the example illustrated in FIG. 6) for reaching SOC 70% from SOC 40% in units of time (ΔT), and the current rate (0.4C in the example illustrated in FIG. 6) for reaching SOC 80% from SOC 40% in units of time (ΔT). Since the SOC increases during charging, the movement between nodes during charging is in the upper right direction.

Although not illustrated in FIG. 6, cost assigner 114 also calculates the current rate for reaching SOC 60% from SOC 50% in units of time (ΔT), the current rate for reaching SOC 70% from SOC 50% in units of time (ΔT), the current rate for reaching SOC 80% from SOC 50% in units of time (ΔT), the current rate for reaching SOC 70% from SOC 60% in units of time (ΔT), the current rate for reaching SOC 80% from SOC 60% in units of time ( ΔT), and the current rate for reaching SOC 80% from SOC 70% in units of time (ΔT).

Cost assigner 114 refers to charge cycle degradation rate characteristic map 122 based on the SOC range and the current rate for each path between nodes in the upper right direction to identify the charge cycle degradation rate. Cost assigner 114 refers to storage degradation rate characteristic map 121 based on the SOC and the temperature to identify the storage degradation rate. For the SOC used to identify the storage degradation rate, for example, the average value of the upper limit value and the lower limit value of the SOC range may be used.

Cost assigner 114 calculates, for each path between nodes in the upper right direction, the charge cycle degradation amount of the path between nodes in the upper right direction by multiplying the identified charge cycle degradation rate by the current amount (Ah) corresponding to the unit of SOC (ΔSOC). Cost assigner 114 multiplies the identified storage degradation rate by units of time (ΔT) for each path between nodes in the upper right direction to calculate the storage degradation amount of the path between nodes in the upper right direction. Cost assigner 114 adds up the calculated charge cycle degradation amount and storage degradation amount for each path between nodes in the upper right direction to calculate the final degradation amount.

In practice, not all paths between nodes can be passed as charging paths, and there is limitation by current or time.

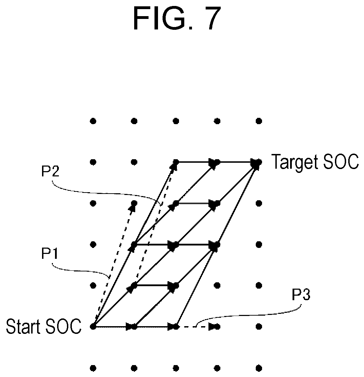

FIG. 7 is a diagram for specifically explaining path current limitation and time limitation. First, time does not go backwards, so there is no path which moves to the left. Also, in the case of charging, since the SOC basically does not decrease, paths always move to the upper right or to the right, and there is no path which moves to the lower right.

The upper limit values of charging power and charging current are defined for each charger 4 in accordance with the specification of charger 4. Accordingly, it is not possible to perform charging exceeding the upper limit value of the charging current of charger 4. Similarly, the upper limit values of charging power and charging current of each electric vehicle 3 is defined in accordance with the specification of electric vehicle 3. Accordingly, it is not possible to perform charging exceeding the upper limit value of the charging current of electric vehicle 3.

Computation system 1 holds, in an upper limit value table (not illustrated) in storage 12, the upper limit values of charging power and charging current for each charger 4 and the upper limit values of charging power and charging current for each electric vehicle 3. The upper limit values of the charging power and charging current of charger 4 and the upper limit values of the charging power and charging current of electric vehicle 3 may be input by the user via operator 13, or may be obtained from charger 4 or electric vehicle 3 when computation system 1 performs communication with charger 4 or electric vehicle 3 for the first time.

Among the paths between nodes calculated in FIG. 6, cost assigner 114 invalidates each path whose current rate required to pass the path exceeds the upper limit value of the charging current of charger 4 or electric vehicle 3.

In the example illustrated in FIG. 7, paths P1 and P2 are invalidated due to current limitation. In such a manner, the angle of movement in the upper right direction is limited by the limitation based on the upper limit current. Path P3 is a path that cannot be passed due to limitations based on the remaining time and the upper limit current. Use of path P3 does not allow the target SOC to be reached within the remaining time within the range of the permitted angle of movement in the upper right direction. Accordingly, path P3 is invalidated.

Path finder 113 finds the charging path that minimizes the total degradation amount of paths between nodes. Specifically, path finder 113 calculates the total storage degradation amount and the total charge cycle degradation amount of each charging path based on (formula 1) and (formula 2) below. Path finder 113 adds up the total storage degradation amount and the total charge cycle degradation amount to calculate the total degradation amount of each charging path. Path finder 113 selects the charging path that minimizes the total degradation amount.

Total storage degradation amount = √(Σ(ΔT*Ks^2)) ... (Formula 1) Storage degradation rate Ks [%/√h] = storage degradation map (SOC [%], temperature [°C])

Total charge cycle degradation amount = √(Σ(ΔAh*Kc^2)) ... (Formula 2) Charge cycle degradation rate Kc [%/√Ah] = Charge cycle degradation map (SOC

### [%], current rate [C])

Path finder 113 is capable of finding the charging path that minimizes the total degradation amount of paths between nodes using an existing path finding algorithm. For example, Dijkstra's algorithm can be used as a path finding algorithm. Path finding algorithms are commonly used in car navigation systems.

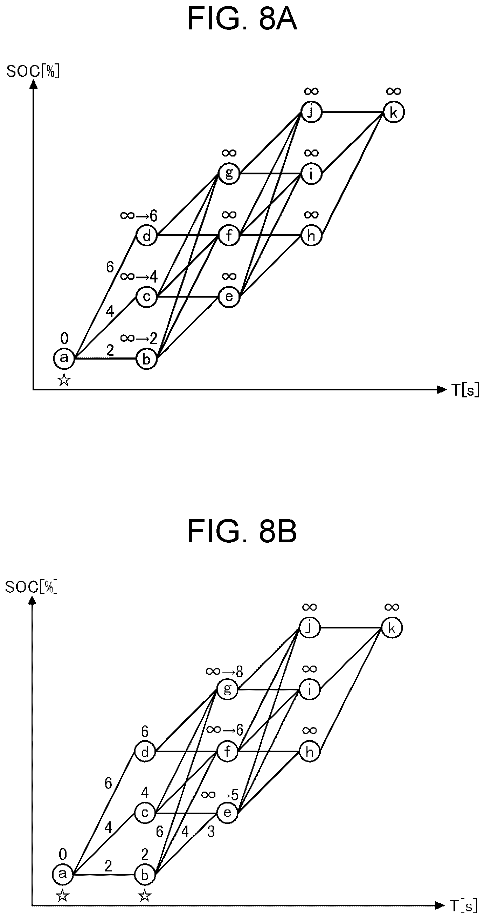

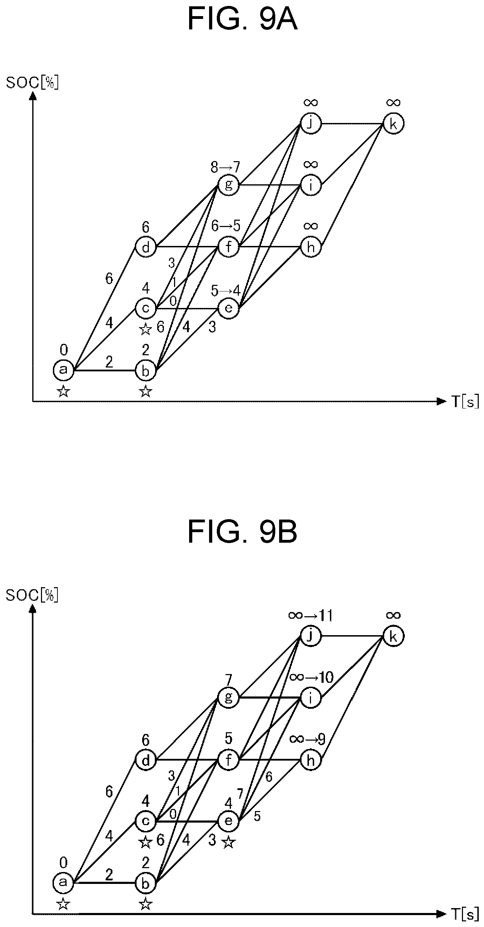

FIG. 8A and FIG. 8B are diagrams for explaining an example of a charging path finding using Dijkstra's algorithm (No. 1). FIG. 9A and FIG. 9B are diagrams for explaining an example of the charging path finding using Dijkstra's algorithm (No. 2). First, as initial processing, path finder 113 sets the distances to all nodes to infinity (∞). Next, path finder 113 sets the distance to node a to zero. Subsequently, the same process is performed repeatedly.

Path finder 113 selects the node with the shortest distance from among the nodes with distances set to infinity, and determines the distance. In the example illustrated in FIG. 8A, the distance to node a is determined to be 0 (see star sign). Next, path finder 113 calculates distances to nodes b, c, and d connected to node a. In the example illustrated in FIG. 8A, the distances to nodes b, c, and d are 2, 4, and 6, respectively. When the distances to nodes b, c, and d are shorter than the distances previously set, path finder 113 updates the distances previously set to newly calculated distances. In the example illustrated in FIG. 8A, the distances to nodes b, c, and d are updated from ∞, ∞, ∞ to 2, 4, 6, respectively.

Next, path finder 113 selects the node with the shortest distance from among the nodes with distances set to infinity, and determines the distance. In the example illustrated in FIG. 8B, the distance to node b is determined to be 2 (see star sign). Next, path finder 113 calculates the total distances via nodes a-b for nodes e, f, and g connected to node b. In the example illustrated in FIG. 8B, the distances to nodes e, f, and g via nodes a-b are 5, 6, and 8, respectively. When the distances to nodes e, f, and g are shorter than the distances previously set, path finder 113 updates the distances previously set to newly calculated distances. In the example illustrated in FIG. 8B, the distances to nodes e, f, and g are updated from ∞, ∞, ∞ to 5, 6, 8, respectively.

Next, path finder 113 selects the node with the shortest distance from among the nodes with distances set to infinity, and determines the distance. In the example illustrated in FIG. 9A, the distance to node c is determined to be 4 (see star sign). Next, path finder 113 calculates the total distances via nodes a-c for nodes e, f, and g connected to node c. In the example illustrated in FIG. 9A, the distances to nodes e, f, and g via nodes a-c are 4, 5, and 7, respectively. When the distances to nodes e, f, and g are shorter than the distances previously set, path finder 113 updates the distances previously set to newly calculated distances. In the example illustrated in FIG. 9A, the distances to nodes e, f, and g are updated from 5, 6, and 8 to 4, 5, and 7, respectively.

Next, path finder 113 selects the node with the shortest distance from among the nodes with distances set to infinity, and determines the distance. In the example illustrated in FIG. 9B, the distance to node e is determined to be 4 (see star sign). Next, path finder 113 calculates the total distance via nodes a-c-e for each of nodes h, i, and j connected to node e. In the example illustrated in FIG. 9B, the distances to nodes h, i, and j via nodes a-c-e are 9, 10, and 11, respectively. When the distances to nodes h, i, and j are shorter than the distances previously set, path finder 113 updates the distances previously set to newly calculated distances. In the example illustrated in FIG. 9A, the distances to nodes h, i, and j are updated from ∞, ∞, ∞ to 9, 10, and 11, respectively. Subsequently, the same processes are repeated until the distances to all nodes are determined.

When path finder 113 finds the charging path that minimizes the degradation amount, charging plan creator 115 converts the found charging path into a charging plan defined by the charging start time and the current value for each unit of time. Charging plan outputter 116 transmits the charging plan created by charging plan creator 115 to charging adapter 6, electric vehicle 3, or charger 4 via communicator 15.

For example, the data format of the charging plan includes the charging start time [s] and the target charging amount [Ah], and defines a plurality of data slots for storing the current values for respective units of time section (for example, every 3 minutes).

Computation system 1 may create a plan for adjusting the temperature in power supply system 40 when battery module 41 in electric vehicle 3 is charged from charger 4. In that case, the temperature adjustment plan is transmitted from computation system 1 to battery manager 42 in electric vehicle 3 directly or via charging adapter 6. For example, the data format of the temperature adjustment plan defines a plurality of data slots for storing target values of temperature for each unit of time (for example, every 3 minutes). Upon receiving the temperature adjustment plan, battery manager 42 adjusts the temperature in battery module 41 according to the temperature adjustment plan. For example, battery manager 42 controls the output of a fan, cooler, or heater (not illustrated) to adjust the temperature in battery module 41.

In the examples illustrated in FIG. 5 to FIG. 9, the charging path that minimizes the degradation amount at the time of charging is found in a state where cells E1 to En connected in series have ideally equal SOCs and SOHs. In practice, however, cells E1-En connected in series often do not have equal SOCs or SOHs.

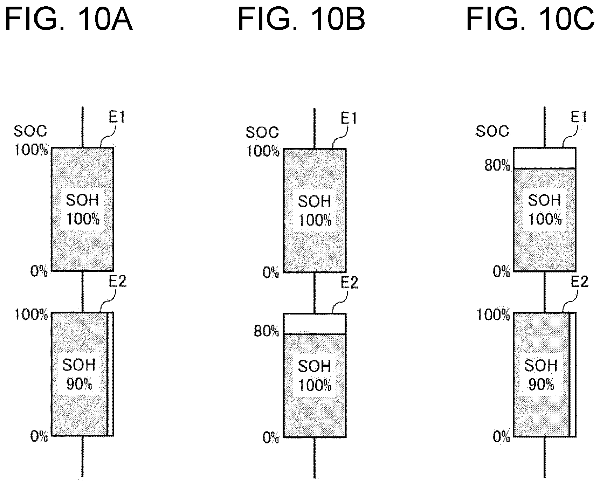

FIG. 10A to FIG. 10C illustrate specific examples of variations in SOC and SOH between two cells E1 and E2 connected in series. The example illustrated in FIG. 10A is an example in which the SOHs of two cells E1 and E2 connected in series are different. Specifically, both of the SOCs of cell E1 and cell E2 are 100%. The SOH of cell E1 is 100%, and the SOH of cell E2 is 90%, indicating that cell E2 is more degraded.

The example illustrated in FIG. 10B is an example in which the SOCs of two cells E1 and E2 connected in series are different. Specifically, both of the SOHs of cell E1 and cell E2 are 100%. The SOC of cell E1 is 100% and the SOC of cell E2 is 80%, indicating that cell E2 has a less capacity.

The example illustrated in FIG. 10C is an example in which both of the SOCs and the SOHs of two cells E1 and E2 connected in series are different. Specifically, the SOC of cell E1 is 80%, and the SOC of cell E2 is 100%, indicating that cell E1 has a less capacity. The SOH of cell E1 is 100%, and the SOH of cell E2 is 90%, indicating that cell E2 is more degraded.

When there are variations between two cells E1 and E2 connected in series, the charging path that minimizes the degradation amount of cell E1 may differ from the charging path that minimizes the degradation amount of cell E2. Accordingly, it is necessary to set an index for determining the charging path for the entire series-connected cells.

A first index is an index that aims at minimizing the degradation amount of the entire cells connected in series. Path finder 113 finds the charging path that minimizes the degradation amount of the cell with a lowest SOH among the cells connected in series. Charging based on such a charging path puts the least load on the cell with a lowest SOH. In a plurality of cells connected in series, the cell with a lowest SOH become bottleneck, and the life of the cell with the lowest SOH determines the life of the entire cells. Use of the first index extends the life of the entire battery module 41.

A second index is an index that aims at minimizing variations in SOH between cells connected in series. Path finder 113 finds the charging path that minimizes the difference in the degradation amount between cells connected in series. Specifically, path finder 113 sets the difference value of the degradation amount (the sum of the differences of the connected cells) as a cost to each path (movement in the horizontal direction and upper right direction in the case of charging), to find the charging path that minimizes the difference value of the degradation amount. Charging based on such a charging path reduces variations in SOH between cells connected in series. Variations in SOH between cells connected in series lead to a reduction in available capacity and life of the entire cells. On the other hand, the charging path determined based on the second index reduces variations in SOH, contributing to an increase in available capacity and life. In particular, variations in SOH between cells are likely to occur in power supply system 40 which does not include a cell balancing circuit (an equalization circuit).

A third index is an index that aims at preventing reduction of the travelable distance on the next day. Path finder 113 finds the charging path that minimizes the degradation amount of the cell with a lowest actual capacity among the cells connected in series. The actual capacity of a cell (that is, the capacity that can actually be discharged) is defined by SOC × SOH. In charging based on such a charging path, the cell with a lowest actual capacity is reliably charged to the target SOC. The available capacity of the entire cells connected in series depends on the capacity of the cell with a lowest actual capacity. On the other hand, in the charging path determined based on the third index, the cell with the lowest actual capacity is reliably charged to the target SOC. Hence, it is possible to prevent reduction of the available capacity of the entire cells connected in series.

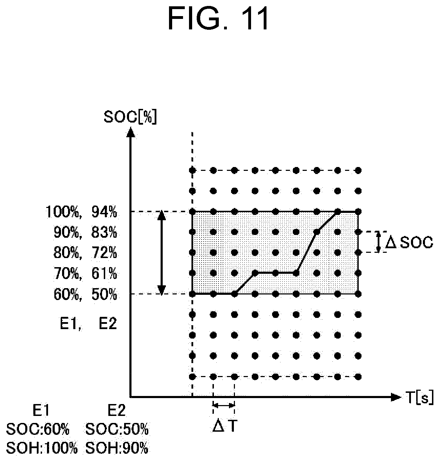

FIG. 11 illustrates an example of charging path finding when two cells E1 and E2 have different SOCs and different SOHs. In the example illustrated in FIG. 11, the SOC and SOH of cell E1 before charging starts are 60% and 100%, respectively. The SOC and SOH of cell E2 before charging starts are 50% and 90%, respectively. In the example illustrated in FIG. 11, the unit SOC (ΔSOC) of cell E1 is set in increments of 10%. The unit SOC (ΔSOC) of cell E2 is set in increments of 9%. The unit SOC (ΔSOC) of cell E2 is calculated by multiplying the unit SOC of cell E1 (ΔSOC = 10%) by SOH of cell E2/SOH of cell E1 (= 90%/100%).

For example, when the first index is set to path finder 113, path finder 113 finds the charging path that minimizes the degradation amount of cell E2. When the third index is set to path finder 113, too, path finder 113 finds the charging path that minimizes the degradation amount of cell E2.

In the examples illustrated in FIG. 5 to FIG. 11, path finder 113 finds the charging path that minimizes the degradation cost at the time of charging. In this regard, path finder 113 may find the charging path that minimizes electricity fees for charging. Cost assigner 114 refers to time-of-use electricity fee table 124 to assign fee costs to paths between nodes. The fee cost is the electricity fees required to pass each path. When the charging time period includes a pay-as-you-go time period, the electricity fees per kWh changes in accordance with the cumulative charging amount in the pay-as-you-go time period.

In the case of a country or region where electricity is traded on the market, such as Pennsylvania New Jersey Maryland (PJM) in the United States, cost assigner 114 obtains the most recent market price for the time slot for charging, and assigns market prices to paths between nodes.

Path finder 113 finds the charging path that minimizes the total fee cost of paths between nodes. Charging plan creator 115 creates a charging plan based on the found charging path. Charging plan outputter 116 transmits the created charging plan to charger 4 directly or via charging adapter 6.

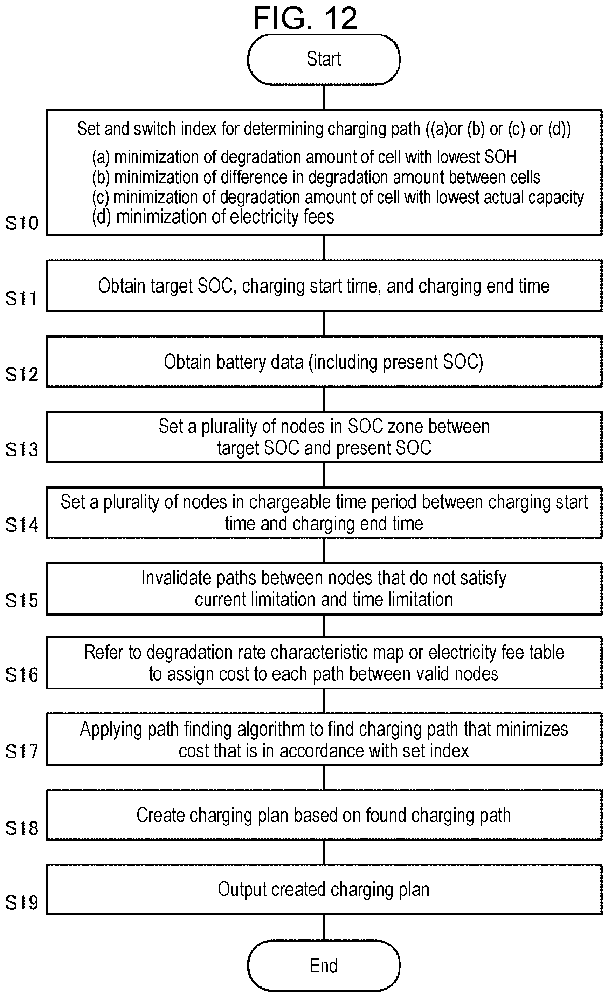

FIG. 12 is a flowchart illustrating a flow of a process of creating a charging plan performed by computation system 1 according to the embodiment. The user selects one of the following four indexes for determining the charging path: (a) minimization of the degradation amount of the cell with a lowest SOH among the cells connected in series; (b) minimization of the difference in degradation amount between the cells connected in series; (c) minimization of the degradation amount of the cell with a lowest actual capacity among the cells connected in series; and (d) minimization of electricity fees.

When input information obtainer 111 obtains the index selected by the user input via operator 13, input information obtainer 111 sets the selected index to path finder 113 (S10). The user is able to switch between the four indexes as appropriate. Alternatively, it may be that processor 11 includes an index switcher (not illustrated), and the index switcher switches between the indexes according to a predetermined rule. For example, the index switcher selects index (c) when the SOH of the entire battery module 41 is higher than a first set value, and switches from index (c) to index (a) when the SOH becomes lower than the first set value. Moreover, for example, in a state where the magnitude of difference in SOH between cells E1-En in battery module 41 is less than a second set value, the index switcher selects index (c), and when the magnitude of the variations becomes greater than the second set value, the index switcher switches index (c) to index (b).

Input information obtainer 111 obtains the target SOC at the time of charging of battery module 41 provided in electric vehicle 3, charging start time, and charging end time which are input from operator 13 (S11). Battery data obtainer 112 obtains battery data (including the present SOCs) of cells E1-En included in battery module 41 from vehicle controller 30 of electric vehicle 3 via communicator 15 (S12).

Path finder 113 sets a plurality of nodes at a predetermined interval in the SOC zone that is between the obtained target SOC and present SOC (S13). Path finder 113 sets a plurality of nodes at a predetermined interval in the chargeable time period that is between the obtained charging start time and the charging end time (S14).

Path finder 113 sets paths between the nodes set in a matrix pattern. Cost assigner 114 invalidates paths between nodes that do not satisfy the current limitation and time limitation (S15). Cost assigner 114 refers to at least one of storage degradation rate characteristic map 121, charge cycle degradation rate characteristic map 122, or time-of-use electricity fee table 124 to assign costs to paths between nodes (S16).

Path finder 113 applies a path finding algorithm to find the charging path that minimizes the cost that is in accordance with the set index (S17). Charging plan creator 115 creates a charging plan based on the found charging path (S18). Charging plan outputter 116 transmits the created charging plan to charger 4 directly or via charging adapter 6 (S19).

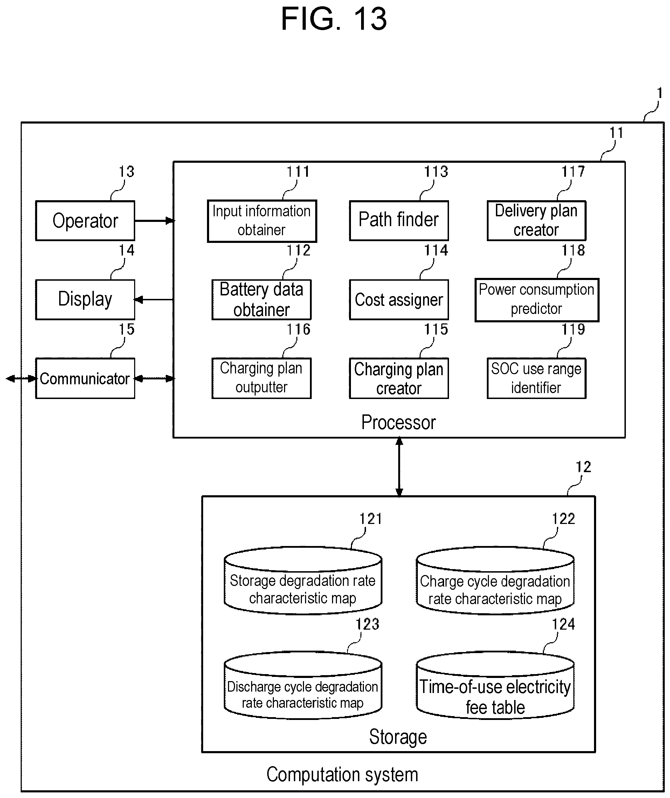

FIG. 13 illustrates configuration example 2 of computation system 1 according to the embodiment. In configuration example 1 illustrated in FIG. 3, it is assumed that the target SOC is input by the user. Configuration example 2 additionally includes a function of automatically calculating the target SOC.

In configuration example 2, in addition to input information obtainer 111, battery data obtainer 112, path finder 113, cost assigner 114, charging plan creator 115, and charging plan outputter 116, processor 11 further includes delivery plan creator 117, power consumption predicter 118, and SOC use range identifier 119.

Delivery plan creator 117 creates a delivery plan for the next day for each electric vehicle 3 owned by the delivery company based on order information from an order management system (not illustrated). The delivery plan also includes a delivery route. Based on the delivery route included in the delivery plan, power consumption predicter 118 calculates the travel distance of electric vehicle 3 required for delivery on the next day. Power consumption predicter 118 calculates the power consumption required to travel the calculated distance as a predicted value of the power consumption for the next day.

SOC use range identifier 119 derives a plurality of candidates for the use range of SOC of battery module 41 for the next day based on the predicted power consumption for the next day. For example, when the predicted power consumption for the next day is equivalent to 50% of the depth of discharge (DOD) of battery module 41, SOC use range identifier 119 derives 100-50%, 90-40%, 80-30%, 70-20%, 60-10%, and 50-0% as a plurality of candidates for the SOC use range. In this example, candidates are derived in increments of 10%, but candidates may be derived in other increments.

Path finder 113 sets, for each of the candidates for the SOC use range, a plurality of nodes at a predetermined interval in the SOC use range. Path finder 113 sets a plurality of nodes at a predetermined interval in the delivery time period that is between the delivery start time and the delivery end time based on the delivery plan for the next day. Path finder 113 sets paths between the nodes set in a matrix pattern. Cost assigner 114 refers to storage degradation rate characteristic map 121 and discharge cycle degradation rate characteristic map 123 to assign degradation costs to paths between nodes.

Path finder 113 finds, for each of the plurality of candidates for the SOC use range, the discharging path that minimizes the total degradation cost of paths between nodes. Path finder 113 identifies the SOC use range of the discharging path with the lowest minimum total degradation cost among the discharging paths which minimizes the total degradation costs for the plurality of candidates for the SOC use range. Path finder 113 sets the upper limit SOC of the identified SOC use range to the target SOC at the time of charging.

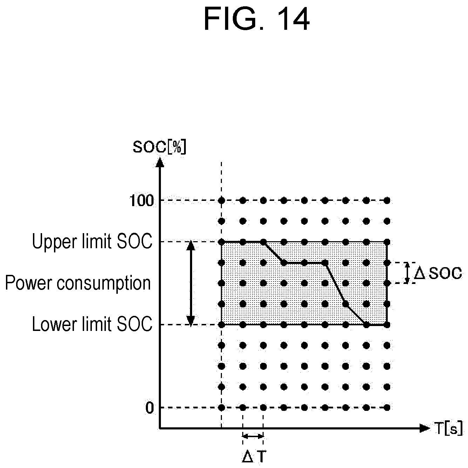

FIG. 14 illustrates an example of discharging path finding. FIG. 14 illustrates an example of creating a discharging plan based on a delivery plan in which power consumption is predicted to be 40 % of DOD. Path finder 113 finds the optimum path from the optimum upper limit SOC to the optimum lower limit SOC within the delivery time period of the next day. In the example illustrated in FIG. 14, the discharging path with the upper limit SOC of 80% and the lower limit SOC of 40% is selected as the optimum path.

The method of assigning the degradation costs to paths between nodes is the same as that for finding a charging path described above, except that the relationship is inverse.

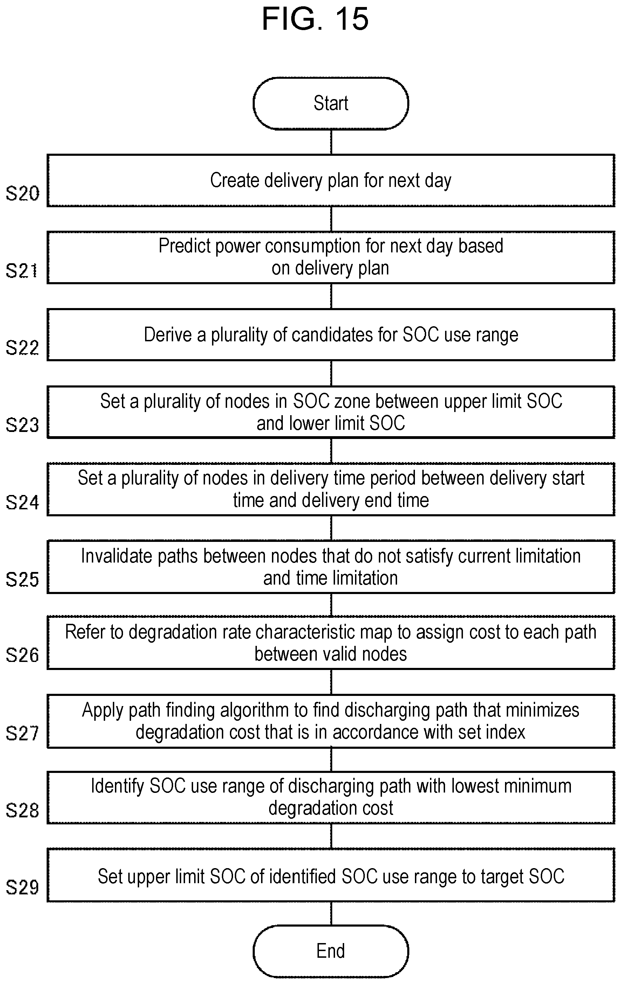

FIG. 15 is a flowchart illustrating a flow of a process of deriving a target SOC performed by computation system 1 according to the embodiment. Delivery plan creator 117 creates a delivery plan of electric vehicle 3 for the next day based on order information from an order management system (not illustrated) (S20). Based on the delivery route included in the delivery plan, power consumption predicter 118 calculates the travel distance of electric vehicle 3 required for delivery on the next day, and predicts the power consumption required to travel the distance (S21).

SOC use range identifier 119 derives a plurality of candidates for the SOC use range of battery module 41 for the next day based on the predicted power consumption for the next day (S22). For each of the candidates for the SOC use range, path finder 113 sets a plurality of nodes at a predetermined interval in the SOC zone between the upper limit SOC and the lower limit SOC of the SOC use range (S23). Path finder 113 sets a plurality of nodes at a predetermined interval in the delivery time period between the delivery start time and the delivery end time (S24).

Path finder 113 sets paths between the nodes set in a matrix pattern. Cost assigner 114 invalidates paths between nodes that do not satisfy the current limitation and time limitation (S25). Cost assigner 114 refers to storage degradation rate characteristic map 121 and discharge cycle degradation rate characteristic map 123 to assign degradation costs to paths between nodes (S26).

Path finder 113 applies a path finding algorithm to find the discharging path that minimizes the degradation cost that is in accordance with the set index (S27). In configuration example 2, the index is selected from the following three indexes: (a) minimization of the degradation amount of the cell with a lowest SOH among the cells connected in series; (b) minimization of the difference in the degradation amount between the cells connected in series; and (c) minimization of the degradation amount of the cell with a lowest actual capacity among the cells connected in series.

Path finder 113 identifies the SOC use range of the discharging path with the lowest minimum degradation cost among the discharging paths that minimizes degradation costs for the plurality of candidates for the SOC use range (S28). Path finder 113 sets the upper limit SOC of the identified SOC use range to the target SOC at the time of charging (S29).

In the flowchart illustrated in FIG. 15, path finder 113 identifies the SOC use range of the discharging path with the lowest minimum degradation cost among the discharging paths with the minimum degradation costs for the plurality of candidates for the SOC use range. In this regard, the SOC use range may be identified by the following process. Path finder 113 calculates a total degradation amount [i] of the discharging path with the minimum degradation cost for each of a plurality (i) of candidates for the SOC use range. Path finder 113 calculates, for each of the plurality (i) of candidates for the SOC use range, the total degradation amount [i] of the charging path with the minimum degradation cost from the present SOC to the upper limit SOC of the SOC use range. For each of the plurality (i) of candidates for the SOC use range, path finder 113 adds up the total degradation amount [i] of the discharging path with the minimum degradation cost and the total degradation amount [i] of the charging path with the minimum degradation cost. Path finder 113 identifies the SOC use range with the minimum total degradation amount [i]. In this case, there is no need to find a new charging path, and a charging plan is created based on the charging path with the minimum degradation cost calculated above.

Moreover, the SOC use range may be identified by the following process. For each of a plurality (i) of candidates for the SOC use range, path finder 113 applies the predicted discharge pattern to calculate a total degradation amount [i] of the discharging path. For example, for each of candidates for the SOC use range of 100-50%, 90-40%, 80-30%, 70-20%, 60-10%, and 50-0%, path finder 113 calculates a total degradation amount [i] of the discharging path when applying the discharge pattern corresponding to the travel pattern predicted based on the delivery plan. Path finder 113 calculates, for each of the plurality (i) of candidates for the SOC use range, a total degradation amount [i] of the charging path that minimizes the degradation cost from the present SOC to the upper limit SOC of the SOC use range. For each of the plurality (i) of candidates for the SOC use range, path finder 113 adds up the total degradation amount [i] of the discharging path and the total degradation amount [i] of the charging path. Path finder 113 identifies the SOC use range with a minimum total degradation amount [i]. In this case, there is no need to find a new charging path, and a charging plan is created based on the charging path with the minimum degradation cost calculated above.

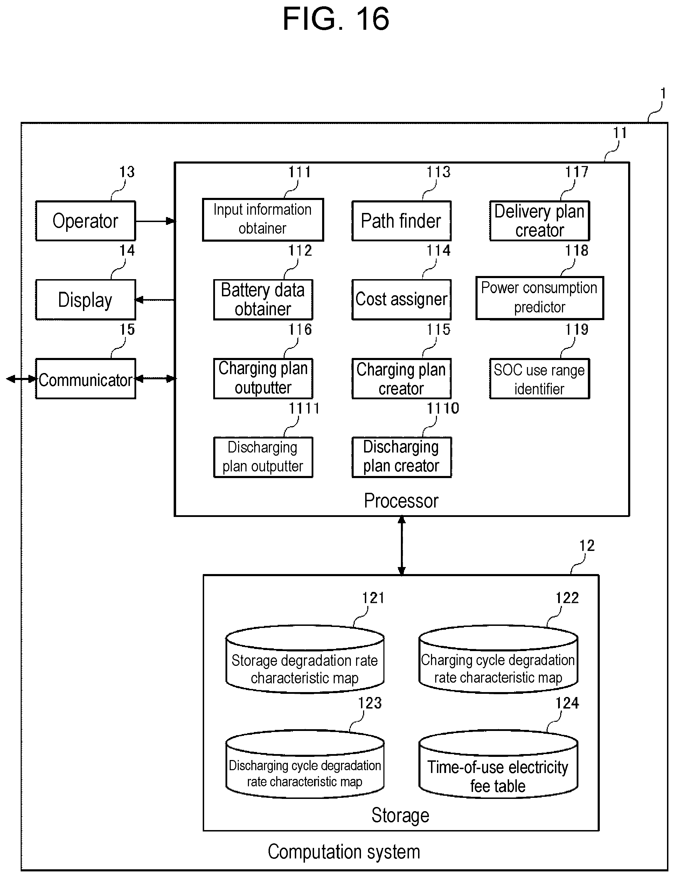

FIG. 16 illustrates configuration example 3 of computation system 1 according to the embodiment. Configuration example 3 additionally includes a function of creating a discharging plan. In configuration example 3, in addition to input information obtainer 111, battery data obtainer 112, path finder 113, cost assigner 114, charging plan creator 115, charging plan outputter 116, delivery plan creator 117, power consumption predicter 118, and SOC use range identifier 119, processor 11 further includes discharging plan creator 1110 and discharging plan outputter 1111.

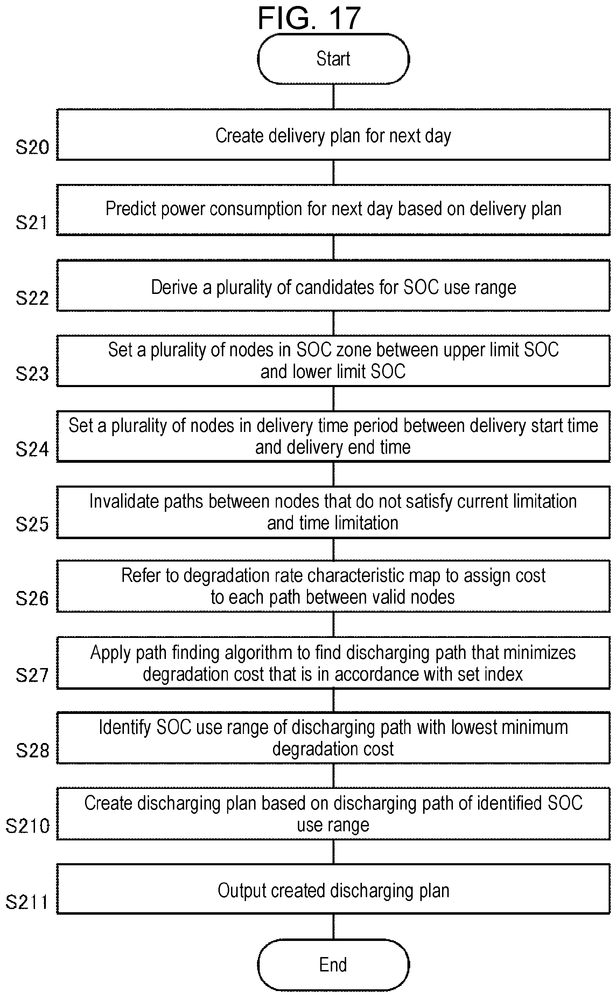

FIG. 17 is a flowchart illustrating a flow of a process of creating a discharging plan performed by computation system 1 according to the embodiment. The processes from step S20 to step S28 in the flowchart illustrated in FIG. 17 are the same as the processes from step S20 to step S28 in the flowchart illustrated in FIG.15.

Path finder 113 identifies the SOC range of the discharging path with the lowest minimum degradation cost among the discharging paths with the minimum degradation costs for the plurality of candidates for the SOC use range (S28). Discharging plan creator 1110 creates a discharging plan based on the discharging path with the minimum degradation cost of the identified SOC use range (S210). Specifically, discharging plan creator 1110 converts the identified discharging path into a discharging plan defined by the travel start time (discharging start time) and the current value for each unit of time section.

For example, the data format of the discharging plan includes the travel start time [s] and the predicted power consumption [Ah], and defines a plurality of data slots for storing the current values for respective units of time section. Note that discharging plan creator 1110 may convert the current value for each unit of time section into the speed of electric vehicle 3, and store the recommended speed of electric vehicle 3 for each unit of time section in a plurality of data slots.

Discharging plan outputter 1111 transmits the created discharging plan to electric vehicle 3 directly or via charging adapter 6 (S211).

Upon receiving the discharging plan, vehicle controller 30 in electric vehicle 3 displays the recommended speed for each time slot on the in-vehicle display (for example, the display of the car navigation system, or the meter display). When electric vehicle 3 is an automatic driving vehicle, electric vehicle 3 travels at a speed that is as close as possible to the recommended speed for each time slot within the range of safety standards.

The process in the flowchart illustrated in FIG. 17 is a process performed assuming that the battery can be charged in advance to the optimum upper limit SOC before the start of delivery. In this regard, when creating a discharging plan with the present SOC as the discharge start SOC, processing is performed as follows. SOC use range identifier 119 converts the power consumption predicted by power consumption predicter 118 into the DOD of battery module 41. SOC use range identifier 119 sets the present SOC to the upper limit SOC of the SOC use range, and sets a value obtained by subtracting the DOD from the upper limit SOC to the lower limit SOC of the SOC use range.

Path finder 113 sets a plurality of nodes in the SOC use range determined by SOC use range identifier 119, and sets a plurality of nodes in the travelable time period (dischargeable time period) that is between the travel start time (discharging start time) and the travel end time (discharging end time). Cost assigner 114 refers to storage degradation rate characteristic map 121 and discharge cycle degradation rate characteristic map 123 to assign degradation costs to paths between nodes. Path finder 113 finds the discharging path that minimizes the total degradation cost of paths between nodes among discharging paths from the upper limit SOC of the SOC use range at the travel start time to the lower limit SOC of the SOC use range at the travel end time via a plurality of nodes.

As described above, according to the present embodiment, it is possible to create a charging plan or a discharging plan that minimizes costs, such as degradation of the secondary battery. For charging electric vehicle 3 used for delivery business, etc., it is desirable to create a charging plan that minimizes the degradation amount of the secondary battery during the nighttime when the electricity fees are low. The SOC at the start of charging and the chargeable time period available for charging change daily. It is necessary to create an optimum charging plan according to such changes in the SOC at the charting start time and chargeable time period.

In the present embodiment, charging from the present SOC to the target SOC is considered using a path problem. In other words, it is possible to create the optimum charging plan by setting the degradation amount to the passage cost of each path with reference to storage degradation rate characteristic map 121 and charge cycle degradation rate characteristic map 122, and finding the path which minimizes the degradation amount.

With this method, it is possible find the charging pattern with the minimum degradation amount within a specified time period (chargeable time period), and it is possible to collectively perform optimization control on the three elements of current control, time control, and storage SOC. Conventionally, it was not possible to simultaneously obtain the determination of the three elements of current control, time control, and storage SOC with a single mechanism.

Moreover, in the present embodiment, the battery data (SOC, SOH) of cells E1-En is input, so that the amount of degradation of battery module 41 as a whole can be minimized. It is also possible to reduce an increase in the SOH difference between cells E1-En. These control modes can be easily switched by switching the cost index for the paths depending on the intended use.

The present disclosure has been described above based on the embodiment. The embodiment has been given by way of illustration. It will be understood by those skilled in the art that various modifications may be made to combinations of the structural elements and processes, and all such modifications are also intended to fall within the scope of the present disclosure.

In the embodiment described above, four indexes are given as examples. In this regard, an index that aims at both reduction of the cell degradation and saving of electricity fees may be provided. For example, path finder 113 calculates the degradation amount cost and electricity fee cost for each selectable charging path, performs a weighted addition or weighted average on the costs to calculate the total cost, and identifies the charging path with the minimum total cost.

In the embodiment, the example has been described where a charging plan is transmitted to charger 4 via charging adapter 6 from computation system 1. In this regard, charging adapter 6 is not essential, and can be omitted. In that case, the charging plan is transmitted to charger 4 from computation system 1 directly or via electric vehicle 3.

In addition, the index that aims at minimizing electricity fees is not essential, and can be omitted. In that case, time-of-use electricity fee table 124 can be omitted.

In the embodiment, the example has been described where a charging plan or a discharging plan for battery module 41 provided in electric vehicle 3 is created. In this regard, electric vehicle 3 may be a two-wheel electric motorcycle (electric scooter) or an electric bicycle. Examples of electric vehicle 3 include low-speed electric vehicle 3, such as a golf cart and a land car used in shopping malls, entertainment facilities, and the like. Moreover, the object in which battery module 41 is provided is not limited to electric vehicle 3. For example, electric moving bodies, such as electric ships, railroad vehicles, and multicopters (drones), are also included.

With this, it is possible to create a discharging plan that minimizes the discharging cost.

### REFERENCE MARKS IN THE DRAWINGS

- 1: computation system
- 2: network
- 3: electric vehicle
- 4: charger
- 5: commercial power system
- 6: charging adaptor
- 11: processor
- 111: input information obtainer
- 112: battery data obtainer
- 113: path finder
- 114: cost assigner
- 115: charging plan creator
- 116: charging plan outputter
- 117: delivery plan creator
- 118: power consumption predictor
- 119: SOC use range identifier
- 1110: discharging plan creator
- 1111: discharging plan outputter
- 12: storage
- 121: storage degradation rate characteristic map
- 122: charge cycle degradation rate characteristic map
- 123: discharge cycle degradation rate characteristic map
- 124: time-of-use electricity fee table
- 13: operator
- 14: display
- 15: communicator
- 30: vehicle controller
- 34: motor
- 35: inverter
- 36: wireless communicator
- 36a: antenna
- 40: power supply system
- 41: battery module
- 42: battery manager
- 43: voltage measurer
- 44: temperature measurer
- 45: current measurer
- 46: battery controller
- E1-En: cell
- RY1,RY2: relay
- T1,T2: temperature sensor
- Rs: shunt resistor

## Claims

1. A computation system (1), wherein said system (1) comprises:
a path finder (113) which (i) sets a plurality of nodes (a b c d e f g h i j k) at a first predetermined interval in a state of charge (SOC) zone that is between a target SOC and a present SOC of a secondary battery (41) provided in an electric moving body (3), (ii) sets a plurality of nodes (a b c d e f g h i j k) at a second predetermined interval in a chargeable time period that is between a charging start time and a charging end time of the secondary battery (41), and (iii) finds a charging path from the present SOC at the charging start time to the target SOC at the charging end time via nodes among the plurality of nodes (a b c d e f g h i j k) set in the SOC zone and the plurality of nodes (a b c d e f g h i j k) set in the chargeable time period, the target SOC being set when the secondary battery (41) is charged, and the plurality of nodes being set in a matrix pattern based on the first and second predetermined intervals;
a charging plan creator (115) which creates a charging plan based on the charging path found;
a cost assigner (114) which refers in units of time corresponding to the second predetermined interval to at least one of a storage degradation characteristic and a charge cycle degradation characteristic, or to a time-of-use electricity fee table, to assign a cost of a degradation amount or a cost of an electricity fee, respectively, to each of paths between the plurality of nodes (a b c d e f g h i j k), the storage degradation characteristic being defined by at least one element including at least one of the SOC or a temperature of the secondary battery (41), the charge cycle degradation characteristic defining a cycle degradation rate at a time of charging that is defined by at least one element including at least one of the SOC or a current rate of charging current of the secondary battery (41),
wherein the path finder (113) finds a charging path that minimizes a total cost of paths between the nodes.

2. The computation system (1) according to claim 1,
wherein the charging plan creator (115) creates a charging plan including the charging start time and a current value in each of sections of time.

3. The computation system (1) according to claim 1 or claim 2,
wherein the cost assigner (114) invalidates a path with a current rate that exceeds an upper limit value of the charging current among the paths between the plurality of nodes (a b c d e f g h i j k), the current rate being required for passage of each of the paths.

4. The computation system (1) according to any one of claims 1 to 3,
wherein the secondary battery (41) includes a plurality of cells (E1 to En) connected in series, and
the path finder (113) finds a charging path that minimizes a degradation amount of a cell with a lowest state of health (SOH) among the plurality of cells (E1 to En).

5. The computation system (1) according to any one of claims 1 to 3,
wherein the secondary battery (41) includes a plurality of cells (E1 to En) connected in series, and
the path finder (113) finds a charging path that minimizes a difference in a degradation amount between the plurality of cells (E1 to En).

6. The computation system (1) according to any one of claims 1 to 3,
wherein the secondary battery (41) includes a plurality of cells (E1 to En) connected in series, and
the path finder (113) finds a charging path that minimizes a degradation amount of a cell with a lowest actual capacity among the plurality of cells (E1 to En).

7. The computation system (1) according to any one of claims 1 to 3,
wherein the path finder (113) finds a charging path that minimizes a total electricity fee of the paths between the nodes.

8. The computation system (1) according to any one of claims 1 to 7,
wherein the path finder (113) is configured to switch an index for determining a cost of a charging path to be minimized.

9. The computation system (1) according to any one of claims 1 to 8, further comprising
a SOC use range identifier (119) which derives a plurality of candidates for a SOC use range of the secondary battery (41) based on power consumption predicted to be required for a next use of the electric moving body (3),
wherein, for each of the plurality of candidates derived for the SOC use range, the path finder (113) sets a plurality of nodes (a b c d e f g h i j k) in the SOC use range, and sets a plurality of nodes (a b c d e f g h i j k) in a use time period that is between a next use start time and a next use end time of the electric moving body (3),
the cost assigner (114) refers to the storage degradation characteristic and a discharge cycle degradation characteristic to assign a degradation cost to each of paths between nodes among the plurality of nodes (a b c d e f g h i j k) set in the SOC use range and the use time period, the discharge cycle degradation characteristic defining a cycle degradation rate at a time of discharging that is defined by at least one element including at least one of the SOC or a current rate of discharging current of the secondary battery (41), and
the path finder (113) (i) finds, for each of the plurality of candidates for the SOC use range, at least one discharging path that minimizes a total degradation cost of the paths between the nodes, (ii) identifies a SOC use range of a discharging path with a lowest total degradation cost among the at least one discharging path each of which minimizes the total degradation cost, and (iii) sets, to the target SOC, an upper limit value of the SOC use range identified.

10. The computation system (1) according to any one of claims 1 to 8, further comprising
a SOC use range identifier (119) which derives a plurality of candidates for a SOC use range of the secondary battery (41) based on power consumption predicted to be required for a next use of the electric moving body (3),
wherein the path finder (113) (i) calculates a degradation amount of at least one discharging path based on a predicted discharging pattern for each of the plurality of candidates for the SOC use range derived, (ii) calculates a degradation amount of a charging path with a minimum degradation cost from a present SOC to an upper limit SOC for each of the plurality of candidates for the SOC use range, (iii) determines a SOC use range which minimizes a sum of the degradation amount of the at least one discharging path and the degradation amount of the charging path, and (iv) sets, to the target SOC, an upper limit value of the SOC use range determined.

11. A non-transitory machine-readable recording medium configured to store a charging plan creation program, wherein said program is configured for causing a computer to perform:
setting a plurality of nodes (a b c d e f g h i j k) at a first predetermined interval in a state of charge (SOC) zone that is between a target SOC and a present SOC of a secondary battery (41) provided in an electric moving body (3), and setting a plurality of nodes (a b c d e f g h i j k) at a second predetermined interval in a chargeable time period that is between a charging start time and a charging end time of the secondary battery (41), the target SOC being set when the secondary battery (41) is charged, and the plurality of nodes being set in a matrix pattern based on the first and second predetermined intervals;
referring in units of time corresponding to the second predetermined interval to at least one of a storage degradation characteristic and a charge cycle degradation characteristic, or to a time-of-use electricity fee table, to assign a cost of a degradation amount or a cost of an electricity fee, respectively, to each of paths between the plurality of nodes (a b c d e f g h i j k) set in the SOC zone and the chargeable time period, the storage degradation characteristic being defined by at least one element including at least one of the SOC or a temperature of the secondary battery (41), the charge cycle degradation characteristic defining a cycle degradation rate at a time of charging that is defined by at least one element including at least one of the SOC or a current rate of charging current of the secondary battery (41),
finding a charging path that minimizes a total cost of the paths between the nodes among charging paths from the present SOC at the charging start time to the target SOC at the charging end time via the nodes; and
creating a charging plan based on the charging path found.

12. A computation system (1) wherein said system (1) comprises:
a path finder (113) which (i) sets a plurality of nodes (a b c d e f g h i j k) at a first predetermined interval in a state of charge (SOC) use range that is set when a secondary battery (41) provided in an electric moving body (3) is discharged, (ii) sets a plurality of nodes (a b c d e f g h i j k) at a second predetermined interval in a dischargeable time period that is between a discharging start time and a discharging end time of the secondary battery (41), and (iii) finds at least one discharging path from an upper limit SOC of the SOC use range at the discharging start time to a lower limit SOC of the SOC use range at the discharging end time via nodes among the plurality of nodes (a b c d e f g h i j k) set in the SOC use range and the dischargeable time period, and the plurality of nodes being set in a matrix pattern based on the first and second predetermined intervals;
a discharging plan creator (1110) which creates a discharging plan based on the at least one discharging path found; and
a cost assigner (114) which refers in units of time corresponding to the second predetermined interval to a storage degradation characteristic and a discharge cycle degradation characteristic to assign a degradation cost to each of paths between the plurality of nodes (a b c d e f g h i j k), the storage degradation characteristic defining a storage degradation rate that is defined by at least one element including at least one of the SOC or a temperature of the secondary battery (41), the discharge cycle degradation characteristic defining a cycle degradation rate at a time of discharging that is defined by at least one element including at least one of the SOC or a current rate of discharging current of the secondary battery (41),
wherein the path finder (113) finds at least one discharging path that minimizes a total degradation cost of paths between the nodes.

13. A non-transitory machine-readable recording medium configured to store a discharging plan creation program, wherein said program is configured for causing a computer to perform:
setting a plurality of nodes (a b c d e f g h i j k) at a first predetermined interval in a state of charge (SOC) use range that is set when a secondary battery (41) provided in an electric moving body (3) is discharged, and setting a plurality of nodes (a b c d e f g h i j k) at a second predetermined interval in a dischargeable time period that is between a discharging start time and a discharging end time of the secondary battery (41), and the plurality of nodes being set in a matrix pattern based on the first and second predetermined intervals;
referring in units of time corresponding to the second predetermined interval to a storage degradation characteristic and a discharge cycle degradation characteristic to assign a degradation cost to each of paths between nodes among the plurality of nodes (a b c d e f g h i j k) set in the SOC use range and the dischargeable time period, the storage degradation characteristic being defined by at least one element including at least one of the SOC or a temperature of the secondary battery (41), the discharge cycle degradation characteristic defining a cycle degradation rate at a time of discharging that is defined by at least one element including at least one of the SOC or a current rate of discharging current of the secondary battery (41);
finding at least one discharging path that minimizes a total degradation cost of the paths between the nodes among at least one discharging path from an upper limit SOC of the SOC use range at the discharging start time to a lower limit SOC of the SOC use range at the discharging end time via the nodes; and
creating a discharging plan based on the at least one discharging path found.

## Patentansprüche

1. Rechensystem (1), wobei das System (1) umfasst:
einen Pfadfinder (113), der (i) eine Vielzahl von Knoten (a b c d e f g h i j k) in einem ersten vorbestimmten Intervall in einer Ladezustandszone (SOC) setzt, die zwischen einem Ziel-SOC und einem aktuellen SOC einer Sekundärbatterie (41) liegt, die in einem elektrischen Bewegungskörper (3) vorgesehen ist, (ii) eine Vielzahl von Knoten (a b c d e f g h i j k) in einem zweiten vorbestimmten Intervall in einer ladbaren Zeitperiode setzt, die zwischen einer Ladestartzeit und einer Ladeendzeit der Sekundärbatterie (41) liegt, und (iii) einen Ladepfad vom aktuellen SOC zur Ladestartzeit zum Ziel-SOC zur Ladeendzeit über Knoten unter der Vielzahl von Knoten (a b c d e f g h i j k), die in der SOC-Zone gesetzt sind, und der Vielzahl von Knoten (a b c d e f g h i j k), die in der ladbaren Zeitperiode gesetzt sind, findet, wobei der Ziel-SOC gesetzt wird, wenn die Sekundärbatterie (41) geladen wird, und die Vielzahl von Knoten in einem Matrixmuster basierend auf dem ersten und zweiten vorbestimmten Intervall gesetzt wird;
einen Ladeplanersteller (115), der einen Ladeplan basierend auf dem gefundenen Ladepfad erstellt;
einen Kostenzuweiser (114), der sich in Zeiteinheiten entsprechend dem zweiten vorbestimmten Intervall auf mindestens eine von einer Speicherdegradationscharakteristik und einer Ladezyklus-Degradationscharakteristik oder auf eine Zeitnutzungs-Stromgebührentabelle bezieht, um einen Kostenbetrag einer Degradationsmenge oder einen Kostenbetrag einer Stromgebühr jeweils jedem der Pfade zwischen der Vielzahl von Knoten (a b c d e f g h i j k) zuzuweisen, wobei die Speicherdegradationscharakteristik durch mindestens ein Element definiert ist, das mindestens eines vom SOC oder einer Temperatur der Sekundärbatterie (41) einschließt, wobei die Ladezyklus-Degradationscharakteristik eine Zyklusdegradationsrate zu einem Zeitpunkt des Ladens definiert, die durch mindestens ein Element definiert ist, das mindestens eines vom SOC oder einer Stromrate des Ladestroms der Sekundärbatterie (41) einschließt,
wobei der Pfadfinder (113) einen Ladepfad findet, der Gesamtkosten der Pfade zwischen den Knoten minimiert.

2. Rechensystem (1) nach Anspruch 1, wobei der Ladeplanersteller (115) einen Ladeplan erstellt, der die Ladestartzeit und einen Stromwert in jedem der Zeitabschnitte einschließt.

3. Rechensystem (1) nach Anspruch 1 oder Anspruch 2, wobei der Kostenzuweiser (114) einen Pfad mit einer Stromrate, die einen oberen Grenzwert des Ladestroms unter den Pfaden zwischen der Vielzahl von Knoten (a b c d e f g h i j k) überschreitet, ungültig macht, wobei die Stromrate für das Passieren jedes der Pfade erforderlich ist.

4. Rechensystem (1) nach einem der Ansprüche 1 bis 3, wobei die Sekundärbatterie (41) eine Vielzahl von in Reihe geschalteten Zellen (E1 bis En) einschließt, und der Pfadfinder (113) einen Ladepfad findet, der eine Degradationsmenge einer Zelle mit einem niedrigsten Gesundheitszustand (SOH) unter der Vielzahl von Zellen (E1 bis En) minimiert.

5. Rechensystem (1) nach einem der Ansprüche 1 bis 3, wobei die Sekundärbatterie (41) eine Vielzahl von in Reihe geschalteten Zellen (E1 bis En) einschließt, und der Pfadfinder (113) einen Ladepfad findet, der eine Differenz in einer Degradationsmenge zwischen der Vielzahl von Zellen (E1 bis En) minimiert.

6. Rechensystem (1) nach einem der Ansprüche 1 bis 3, wobei die Sekundärbatterie (41) eine Vielzahl von in Reihe geschalteten Zellen (E1 bis En) einschließt, und der Pfadfinder (113) einen Ladepfad findet, der eine Degradationsmenge einer Zelle mit einer niedrigsten tatsächlichen Kapazität unter der Vielzahl von Zellen (E1 bis En) minimiert.

7. Rechensystem (1) nach einem der Ansprüche 1 bis 3, wobei der Pfadfinder (113) einen Ladepfad findet, der eine Gesamtstromgebühr der Pfade zwischen den Knoten minimiert.

8. Rechensystem (1) nach einem der Ansprüche 1 bis 7, wobei der Pfadfinder (113) konfiguriert ist, einen Index zum Bestimmen von Kosten eines zu minimierenden Ladepfads umzuschalten.

9. Rechensystem (1) nach einem der Ansprüche 1 bis 8, ferner umfassend einen SOC-Nutzungsbereichsidentifikator (119), der eine Vielzahl von Kandidaten für einen SOC-Nutzungsbereich der Sekundärbatterie (41) basierend auf einem Stromverbrauch ableitet, der als für eine nächste Nutzung des elektrischen Bewegungskörpers (3) erforderlich vorhergesagt wird,
wobei für jeden der Vielzahl von für den SOC-Nutzungsbereich abgeleiteten Kandidaten der Pfadfinder (113) eine Vielzahl von Knoten (a b c d e f g h i j k) im SOC-Nutzungsbereich setzt und eine Vielzahl von Knoten (a b c d e f g h i j k) in einer Nutzungszeitperiode setzt, die zwischen einer nächsten Nutzungsstartzeit und einer nächsten Nutzungsendzeit des elektrischen Bewegungskörpers (3) liegt,
der Kostenzuweiser (114) sich auf die Speicherdegradationscharakteristik und eine Entladezyklus-Degradationscharakteristik bezieht, um Degradationskosten jedem der Pfade zwischen Knoten unter der Vielzahl von Knoten (a b c d e f g h i j k), die im SOC-Nutzungsbereich und der Nutzungszeitperiode gesetzt sind, zuzuweisen, wobei die Entladezyklus-Degradationscharakteristik eine Zyklusdegradationsrate zu einem Zeitpunkt des Entladens definiert, die durch mindestens ein Element definiert ist, das mindestens eines vom SOC oder einer Stromrate des Entladestroms der Sekundärbatterie (41) einschließt, und
der Pfadfinder (113) (i) für jeden der Vielzahl von Kandidaten für den SOC-Nutzungsbereich mindestens einen Entladepfad findet, der Gesamtdegradationskosten der Pfade zwischen den Knoten minimiert, (ii) einen SOC-Nutzungsbereich eines Entladepfads mit niedrigsten Gesamtdegradationskosten unter den mindestens einem Entladepfad, von denen jeder die Gesamtdegradationskosten minimiert, identifiziert, und (iii) auf den Ziel-SOC einen oberen Grenzwert des identifizierten SOC-Nutzungsbereichs setzt.

10. Rechensystem (1) nach einem der Ansprüche 1 bis 8, ferner umfassend einen SOC-Nutzungsbereichsidentifikator (119), der eine Vielzahl von Kandidaten für einen SOC-Nutzungsbereich der Sekundärbatterie (41) basierend auf einem Stromverbrauch ableitet, der als für eine nächste Nutzung des elektrischen Bewegungskörpers (3) erforderlich vorhergesagt wird,
wobei der Pfadfinder (113) (i) eine Degradationsmenge von mindesten einen Entladepfad basierend auf einem vorhergesagten Entlademuster für jeden der Vielzahl von Kandidaten für den abgeleiteten SOC-Nutzungsbereich berechnet, (ii) eine Degradationsmenge eines Ladepfads mit minimalen Degradationskosten von einem aktuellen SOC zu einem oberen Grenz-SOC für jeden der Vielzahl von Kandidaten für den SOC-Nutzungsbereich berechnet, (iii) einen SOC-Nutzungsbereich bestimmt, der eine Summe der Degradationsmenge des den mindestens einem Entladepfads und der Degradationsmenge des Ladepfads minimiert, und (iv) auf den Ziel-SOC einen oberen Grenzwert des bestimmten SOC-Nutzungsbereichs setzt.

11. Nicht-flüchtiges maschinenlesbares Aufzeichnungsmedium, das konfiguriert ist, ein Ladeplanerstellungsprogramm zu speichern, wobei das Programm konfiguriert ist, einen Computer zu veranlassen, auszuführen:
Setzen einer Vielzahl von Knoten (a b c d e f g h i j k) in einem ersten vorbestimmten Intervall in einer Ladezustandszone (SOC), die zwischen einem Ziel-SOC und einem aktuellen SOC einer Sekundärbatterie (41) liegt, die in einem elektrischen Bewegungskörper (3) vorgesehen ist, und Setzen einer Vielzahl von Knoten (a b c d e f g h i j k) in einem zweiten vorbestimmten Intervall in einer ladbaren Zeitperiode, die zwischen einer Ladestartzeit und einer Ladeendzeit der Sekundärbatterie (41) liegt, wobei der Ziel-SOC gesetzt wird, wenn die Sekundärbatterie (41) geladen wird, und die Vielzahl von Knoten in einem Matrixmuster basierend auf dem ersten und zweiten vorbestimmten Intervall gesetzt wird;
Bezugnahme in Zeiteinheiten entsprechend dem zweiten vorbestimmten Intervall auf mindestens eine von einer Speicherdegradationscharakteristik und einer Ladezyklus-Degradationscharakteristik oder auf eine Zeitnutzungs-Stromgebührentabelle, um einen Kostenbetrag einer Degradationsmenge oder einen Kostenbetrag einer Stromgebühr jeweils jedem der Pfade zwischen der Vielzahl von Knoten (a b c d e f g h i j k), die in der SOC-Zone und der ladbaren Zeitperiode gesetzt sind, zuzuweisen, wobei die Speicherdegradationscharakteristik durch mindestens ein Element definiert ist, das mindestens eines vom SOC oder einer Temperatur der Sekundärbatterie (41) einschließt, wobei die Ladezyklus-Degradationscharakteristik eine Zyklusdegradationsrate zu einem Zeitpunkt des Ladens definiert, die durch mindestens ein Element definiert ist, das mindestens eines vom SOC oder einer Stromrate des Ladestroms der Sekundärbatterie (41) einschließt,
Finden eines Ladepfads, der Gesamtkosten der Pfade zwischen den Knoten minimiert, unter Ladepfaden vom aktuellen SOC zur Ladestartzeit zum Ziel-SOC zur Ladeendzeit über die Knoten; und
Erstellen eines Ladeplans basierend auf dem gefundenen Ladepfad.

12. Rechensystem (1), wobei das System (1) umfasst:
einen Pfadfinder (113), der (i) eine Vielzahl von Knoten (a b c d e f g h i j k) in einem ersten vorbestimmten Intervall in einem Ladezustands-Nutzungsbereich (SOC) setzt, der gesetzt wird, wenn eine Sekundärbatterie (41), die in einem elektrischen Bewegungskörper (3) vorgesehen ist, entladen wird, (ii) eine Vielzahl von Knoten (a b c d e f g h i j k) in einem zweiten vorbestimmten Intervall in einer entladbaren Zeitperiode setzt, die zwischen einer Entladestartzeit und einer Entladeendzeit der Sekundärbatterie (41) liegt, und (iii) mindestens einem Entladepfad von einem oberen Grenz-SOC des SOC-Nutzungsbereichs zur Entladestartzeit zu einem unteren Grenz-SOC des SOC-Nutzungsbereichs zur Entladeendzeit über Knoten unter der Vielzahl von Knoten (a b c d e f g h i j k), die im SOC-Nutzungsbereich und der entladbaren Zeitperiode gesetzt sind, findet, und die Vielzahl von Knoten in einem Matrixmuster basierend auf dem ersten und zweiten vorbestimmten Intervall gesetzt wird;
einen Entladeplanersteller (1110), der einen Entladeplan basierend auf den mindestens einem gefundenen Entladepfad erstellt; und
einen Kostenzuweiser (114), der sich in Zeiteinheiten entsprechend dem zweiten vorbestimmten Intervall auf eine Speicherdegradationscharakteristik und eine Entladezyklus-Degradationscharakteristik bezieht, um Degradationskosten jedem der Pfade zwischen der Vielzahl von Knoten (a b c d e f g h i j k) zuzuweisen, wobei die Speicherdegradationscharakteristik eine Speicherdegradationsrate definiert, die durch mindestens ein Element definiert ist, das mindestens eines vom SOC oder einer Temperatur der Sekundärbatterie (41) einschließt, wobei die Entladezyklus-Degradationscharakteristik eine Zyklusdegradationsrate zu einem Zeitpunkt des Entladens definiert, die durch mindestens ein Element definiert ist, das mindestens eines vom SOC oder einer Stromrate des Entladestroms der Sekundärbatterie (41) einschließt,
wobei der Pfadfinder (113) mindestens einem Entladepfad findet, der Gesamtdegradationskosten der Pfade zwischen den Knoten minimiert.

13. Nicht-flüchtiges maschinenlesbares Aufzeichnungsmedium, das konfiguriert ist, ein Entladeplanerstellungsprogramm zu speichern, wobei das Programm konfiguriert ist, einen Computer zu veranlassen, auszuführen:
Setzen einer Vielzahl von Knoten (a b c d e f g h i j k) in einem ersten vorbestimmten Intervall in einem Ladezustands-Nutzungsbereich (SOC), der gesetzt wird, wenn eine Sekundärbatterie (41), die in einem elektrischen Bewegungskörper (3) vorgesehen ist, entladen wird, und Setzen einer Vielzahl von Knoten (a b c d e f g h i j k) in einem zweiten vorbestimmten Intervall in einer entladbaren Zeitperiode, die zwischen einer Entladestartzeit und einer Entladeendzeit der Sekundärbatterie (41) liegt, und die Vielzahl von Knoten in einem Matrixmuster basierend auf dem ersten und zweiten vorbestimmten Intervall gesetzt wird;
Bezugnahme in Zeiteinheiten entsprechend dem zweiten vorbestimmten Intervall auf eine Speicherdegradationscharakteristik und eine Entladezyklus-Degradationscharakteristik, um Degradationskosten jedem der Pfade zwischen Knoten unter der Vielzahl von Knoten (a b c d e f g h i j k), die im SOC-Nutzungsbereich und der entladbaren Zeitperiode gesetzt sind, zuzuweisen, wobei die Speicherdegradationscharakteristik durch mindestens ein Element definiert ist, das mindestens eines vom SOC oder einer Temperatur der Sekundärbatterie (41) einschließt, wobei die Entladezyklus-Degradationscharakteristik eine Zyklusdegradationsrate zu einem Zeitpunkt des Entladens definiert, die durch mindestens ein Element definiert ist, das mindestens eines vom SOC oder einer Stromrate des Entladestroms der Sekundärbatterie (41) einschließt;
Finden von mindestens einem Entladepfad, der Gesamtdegradationskosten der Pfade zwischen den Knoten minimiert, unter at lest one Entladepfad von einem oberen Grenz-SOC des SOC-Nutzungsbereichs zur Entladestartzeit zu einem unteren Grenz-SOC des SOC-Nutzungsbereichs zur Entladeendzeit über die Knoten; und
Erstellen eines Entladeplans basierend auf den mindestens einem gefundenen Entladepfad.

## Revendications

1. Système de calcul (1), dans lequel ledit système (1) comprend :
un détecteur de chemin (113) qui (i) définit une pluralité de nœuds (a b c d e f g h i j k) à un premier intervalle prédéterminé dans une zone d'état de charge (SOC) qui est entre un SOC cible et un SOC actuel d'une batterie secondaire (41) fournie dans un corps mobile électrique (3), (ii) définit une pluralité de nœuds (a b c d e f g h i j k) à un deuxième intervalle prédéterminé dans une période de temps chargeable qui est entre un temps de début de charge et un temps de fin de charge de la batterie secondaire (41), et (iii) trouve un chemin de charge depuis le SOC actuel au temps de début de charge jusqu'au SOC cible au temps de fin de charge via des nœuds parmi la pluralité de nœuds (a b c d e f g h i j k) définis dans la zone SOC et la pluralité de nœuds (a b c d e f g h i j k) définis dans la période de temps chargeable, le SOC cible étant défini lorsque la batterie secondaire (41) est chargée, et la pluralité de nœuds étant définie selon un motif matriciel basé sur les premier et deuxième intervalles prédéterminés ;
un créateur de plan de charge (115) qui crée un plan de charge basé sur le chemin de charge trouvé ;
un assignateur de coût (114) qui se réfère en unités de temps correspondant au deuxième intervalle prédéterminé à au moins l'une d'une caractéristique de dégradation de stockage et d'une caractéristique de dégradation de cycle de charge, ou à un tableau de tarifs d'électricité selon l'heure d'utilisation, pour assigner un coût d'une quantité de dégradation ou un coût d'un tarif d'électricité, respectivement, à chacun des chemins entre la pluralité de nœuds (a b c d e f g h i j k), la caractéristique de dégradation de stockage étant définie par au moins un élément incluant au moins l'un du SOC ou d'une température de la batterie secondaire (41), la caractéristique de dégradation de cycle de charge définissant un taux de dégradation de cycle à un moment de charge qui est défini par au moins un élément incluant au moins l'un du SOC ou d'un taux de courant du courant de charge de la batterie secondaire (41),
dans lequel le détecteur de chemin (113) trouve un chemin de charge qui minimise un coût total des chemins entre les nœuds.

2. Système de calcul (1) selon la revendication 1, dans lequel le créateur de plan de charge (115) crée un plan de charge incluant le temps de début de charge et une valeur de courant dans chacune des sections de temps.

3. Système de calcul (1) selon la revendication 1 ou la revendication 2, dans lequel l'assignateur de coût (114) invalide un chemin avec un taux de courant qui dépasse une valeur limite supérieure du courant de charge parmi les chemins entre la pluralité de nœuds (a b c d e f g h i j k), le taux de courant étant requis pour le passage de chacun des chemins.

4. Système de calcul (1) selon l'une quelconque des revendications 1 à 3, dans lequel la batterie secondaire (41) inclut une pluralité de cellules (E1 à En) connectées en série, et le détecteur de chemin (113) trouve un chemin de charge qui minimise une quantité de dégradation d'une cellule avec un état de santé (SOH) le plus bas parmi la pluralité de cellules (E1 à En).

5. Système de calcul (1) selon l'une quelconque des revendications 1 à 3, dans lequel la batterie secondaire (41) inclut une pluralité de cellules (E1 à En) connectées en série, et le détecteur de chemin (113) trouve un chemin de charge qui minimise une différence dans une quantité de dégradation entre la pluralité de cellules (E1 à En).

6. Système de calcul (1) selon l'une quelconque des revendications 1 à 3, dans lequel la batterie secondaire (41) inclut une pluralité de cellules (E1 à En) connectées en série, et le détecteur de chemin (113) trouve un chemin de charge qui minimise une quantité de dégradation d'une cellule avec une capacité réelle la plus basse parmi la pluralité de cellules (E1 à En).

7. Système de calcul (1) selon l'une quelconque des revendications 1 à 3, dans lequel le détecteur de chemin (113) trouve un chemin de charge qui minimise un tarif d'électricité total des chemins entre les nœuds.

8. Système de calcul (1) selon l'une quelconque des revendications 1 à 7, dans lequel le détecteur de chemin (113) est configuré pour commuter un indice pour déterminer un coût d'un chemin de charge à minimiser.

9. Système de calcul (1) selon l'une quelconque des revendications 1 à 8, comprenant en outre un identificateur de plage d'utilisation de SOC (119) qui dérive une pluralité de candidats pour une plage d'utilisation de SOC de la batterie secondaire (41) basée sur une consommation d'énergie prédite comme étant requise pour une prochaine utilisation du corps mobile électrique (3),
dans lequel, pour chacun de la pluralité de candidats dérivés pour la plage d'utilisation de SOC, le détecteur de chemin (113) définit une pluralité de nœuds (a b c d e f g h i j k) dans la plage d'utilisation de SOC, et définit une pluralité de nœuds (a b c d e f g h i j k) dans une période de temps d'utilisation qui est entre un temps de début de prochaine utilisation et un temps de fin de prochaine utilisation du corps mobile électrique (3),
l'assignateur de coût (114) se réfère à la caractéristique de dégradation de stockage et à une caractéristique de dégradation de cycle de décharge pour assigner un coût de dégradation à chacun des chemins entre les nœuds parmi la pluralité de nœuds (a b c d e f g h i j k) définis dans la plage d'utilisation de SOC et la période de temps d'utilisation, la caractéristique de dégradation de cycle de décharge définissant un taux de dégradation de cycle à un moment de décharge qui est défini par au moins un élément incluant au moins l'un du SOC ou d'un taux de courant du courant de décharge de la batterie secondaire (41), et
le détecteur de chemin (113) (i) trouve, pour chacun de la pluralité de candidats pour la plage d'utilisation de SOC, au moins un chemin de décharge qui minimise un coût de dégradation total des chemins entre les nœuds, (ii) identifie une plage d'utilisation de SOC d'un chemin de décharge avec un coût de dégradation total le plus bas parmi le au moins un chemin de décharge dont chacun minimise le coût de dégradation total, et (iii) définit, au SOC cible, une valeur limite supérieure de la plage d'utilisation de SOC identifiée.

10. Système de calcul (1) selon l'une quelconque des revendications 1 à 8, comprenant en outre un identificateur de plage d'utilisation de SOC (119) qui dérive une pluralité de candidats pour une plage d'utilisation de SOC de la batterie secondaire (41) basée sur une consommation d'énergie prédite comme étant requise pour une prochaine utilisation du corps mobile électrique (3),
dans lequel le détecteur de chemin (113) (i) calcule une quantité de dégradation d'au moins un chemin de décharge basée sur un motif de décharge prédit pour chacun de la pluralité de candidats pour la plage d'utilisation de SOC dérivée, (ii) calcule une quantité de dégradation d'un chemin de charge avec un coût de dégradation minimum depuis un SOC actuel jusqu'à un SOC limite supérieur pour chacun de la pluralité de candidats pour la plage d'utilisation de SOC, (iii) détermine une plage d'utilisation de SOC qui minimise une somme de la quantité de dégradation du au moins un chemin de décharge et de la quantité de dégradation du chemin de charge, et (iv) définit, au SOC cible, une valeur limite supérieure de la plage d'utilisation de SOC déterminée.

11. Support d'enregistrement non transitoire lisible par machine configuré pour stocker un programme de création de plan de charge, dans lequel ledit programme est configuré pour amener un ordinateur à effectuer :
la définition d'une pluralité de nœuds (a b c d e f g h i j k) à un premier intervalle prédéterminé dans une zone d'état de charge (SOC) qui est entre un SOC cible et un SOC actuel d'une batterie secondaire (41) fournie dans un corps mobile électrique (3), et la définition d'une pluralité de nœuds (a b c d e f g h i j k) à un deuxième intervalle prédéterminé dans une période de temps chargeable qui est entre un temps de début de charge et un temps de fin de charge de la batterie secondaire (41), le SOC cible étant défini lorsque la batterie secondaire (41) est chargée, et la pluralité de nœuds étant définie selon un motif matriciel basé sur les premier et deuxième intervalles prédéterminés ;
la référence en unités de temps correspondant au deuxième intervalle prédéterminé à au moins l'une d'une caractéristique de dégradation de stockage et d'une caractéristique de dégradation de cycle de charge, ou à un tableau de tarifs d'électricité selon l'heure d'utilisation, pour assigner un coût d'une quantité de dégradation ou un coût d'un tarif d'électricité, respectivement, à chacun des chemins entre la pluralité de nœuds (a b c d e f g h i j k) définis dans la zone SOC et la période de temps chargeable, la caractéristique de dégradation de stockage étant définie par au moins un élément incluant au moins l'un du SOC ou d'une température de la batterie secondaire (41), la caractéristique de dégradation de cycle de charge définissant un taux de dégradation de cycle à un moment de charge qui est défini par au moins un élément incluant au moins l'un du SOC ou d'un taux de courant du courant de charge de la batterie secondaire (41),
la recherche d'un chemin de charge qui minimise un coût total des chemins entre les nœuds parmi les chemins de charge depuis le SOC actuel au temps de début de charge jusqu'au SOC cible au temps de fin de charge via les nœuds ; et
la création d'un plan de charge basé sur le chemin de charge trouvé.

12. Système de calcul (1), dans lequel ledit système (1) comprend :
un détecteur de chemin (113) qui (i) définit une pluralité de nœuds (a b c d e f g h i j k) à un premier intervalle prédéterminé dans une plage d'utilisation d'état de charge (SOC) qui est définie lorsqu'une batterie secondaire (41) fournie dans un corps mobile électrique (3) est déchargée, (ii) définit une pluralité de nœuds (a b c d e f g h i j k) à un deuxième intervalle prédéterminé dans une période de temps déchargeable qui est entre un temps de début de décharge et un temps de fin de décharge de la batterie secondaire (41), et (iii) trouve au moins un chemin de décharge depuis un SOC limite supérieur de la plage d'utilisation de SOC au temps de début de décharge jusqu'à un SOC limite inférieur de la plage d'utilisation de SOC au temps de fin de décharge via des nœuds parmi la pluralité de nœuds (a b c d e f g h i j k) définis dans la plage d'utilisation de SOC et la période de temps déchargeable, et la pluralité de nœuds étant définie selon un motif matriciel basé sur les premier et deuxième intervalles prédéterminés ;
un créateur de plan de décharge (1110) qui crée un plan de décharge basé sur le au moins un chemin de décharge trouvé ; et
un assignateur de coût (114) qui se réfère en unités de temps correspondant au deuxième intervalle prédéterminé à une caractéristique de dégradation de stockage et à une caractéristique de dégradation de cycle de décharge pour assigner un coût de dégradation à chacun des chemins entre la pluralité de nœuds (a b c d e f g h i j k), la caractéristique de dégradation de stockage définissant un taux de dégradation de stockage qui est défini par au moins un élément incluant au moins l'un du SOC ou d'une température de la batterie secondaire (41), la caractéristique de dégradation de cycle de décharge définissant un taux de dégradation de cycle à un moment de décharge qui est défini par au moins un élément incluant au moins l'un du SOC ou d'un taux de courant du courant de décharge de la batterie secondaire (41),
dans lequel le détecteur de chemin (113) trouve au moins un chemin de décharge qui minimise un coût de dégradation total des chemins entre les nœuds.

13. Support d'enregistrement non transitoire lisible par machine configuré pour stocker un programme de création de plan de décharge, dans lequel ledit programme est configuré pour amener un ordinateur à effectuer :
la définition d'une pluralité de nœuds (a b c d e f g h i j k) à un premier intervalle prédéterminé dans une plage d'utilisation d'état de charge (SOC) qui est définie lorsqu'une batterie secondaire (41) fournie dans un corps mobile électrique (3) est déchargée, et la définition d'une pluralité de nœuds (a b c d e f g h i j k) à un deuxième intervalle prédéterminé dans une période de temps déchargeable qui est entre un temps de début de décharge et un temps de fin de décharge de la batterie secondaire (41), et la pluralité de nœuds étant définie selon un motif matriciel basé sur les premier et deuxième intervalles prédéterminés ;
la référence en unités de temps correspondant au deuxième intervalle prédéterminé à une caractéristique de dégradation de stockage et à une caractéristique de dégradation de cycle de décharge pour assigner un coût de dégradation à chacun des chemins entre les nœuds parmi la pluralité de nœuds (a b c d e f g h i j k) définis dans la plage d'utilisation de SOC et la période de temps déchargeable, la caractéristique de dégradation de stockage étant définie par au moins un élément incluant au moins l'un du SOC ou d'une température de la batterie secondaire (41), la caractéristique de dégradation de cycle de décharge définissant un taux de dégradation de cycle à un moment de décharge qui est défini par au moins un élément incluant au moins l'un du SOC ou d'un taux de courant du courant de décharge de la batterie secondaire (41) ;
la recherche d'au moins un chemin de décharge qui minimise un coût de dégradation total des chemins entre les nœuds parmi at lest one chemin de décharge depuis un SOC limite supérieur de la plage d'utilisation de SOC au temps de début de décharge jusqu'à un SOC limite inférieur de la plage d'utilisation de SOC au temps de fin de décharge via les nœuds ; et
la création d'un plan de décharge basé sur le au moins un chemin de décharge trouvé.
